# EUROPEAN PATENT APPLICATION

(11) **EP 4 832 593 A1**
(43) Date of publication of application: **28.10.2026**
(21) Application number: 24922918.8
(22) Date of filing: 07.02.2024
(51) Int. Cl.: H04W 52/02

(54) **WIRELESS COMMUNICATION METHOD AND APPARATUS, DEVICE, STORAGE MEDIUM, AND CHIP**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: Grassi, Stefano
(86) International application number: PCT/CN2024/076810
(87) International publication number: WO 2025/166680

(57) **Abstract**

A wireless communication method and apparatus, a device, a storage medium, and a chip, belonging to the technical field of mobile communications. The method is executed by a first device. The method comprises: sending a first signal in a first time unit (601); the first time unit is one or more time units in an available time unit group. The first device is an Ambient Internet of Things (A-IoT) device, the available time unit group comprises a plurality of available time units, and the available time unit group is shared by a plurality of A-IoT devices.

## Description

### TECHNICAL FIELD

The present application relates to the technical field of mobile communications, and in particular to a wireless communication method and apparatus, a device, a storage medium, and a chip.

### BACKGROUND

New Radio (NR) and WiFi systems can support low-cost mass deployment and maintenance-free operation for Ambient Internet of Things (A-IoT) devices.

In New Radio (NR) and WiFi systems, a large number of A-IoT devices may be densely deployed within a space, and when the large number of A-IoT devices perform wireless communication, it may cause severe transmission interference and transmission failure.

### SUMMARY

Embodiments of the present application provide a wireless communication method and apparatus, a device, a storage medium, and a chip. The technical solutions are provided as follows.

In one aspect, the embodiments of the present application provide a wireless communication method, performed by a first device. The method includes the following operation.

A first signal is sent in a first time unit, the first time unit being one or more time units in an available time unit group.

Herein, the first device is an Ambient Internet of Things (A-IoT) device, the available time unit group includes a plurality of available time units, and the available time unit group is shared by a plurality of A-IoT devices.

In one aspect, the embodiments of the present application provide a wireless communication method, performed by a second device. The method includes the following operation.

A first signal sent by the first device in a first time unit is received by the second device, the first time unit being one or more time units in an available time unit group.

Herein, the first device is an A-IoT device, the available time unit group includes a plurality of available time units, and the available time unit group is shared by a plurality of A-IoT devices.

In one aspect, the embodiments of the present application provide a wireless communication apparatus, including a sending module.

The sending module is configured to send a first signal in a first time unit, the first time unit being one or more time units in an available time unit group.

Herein, the first device is an Ambient Internet of Things (A-IoT) device, the available time unit group includes a plurality of available time units, and the available time unit group is shared by a plurality of A-IoT devices.

In one aspect, the embodiments of the present application provide a wireless communication apparatus, including a receiving module.

The receiving module is configured to receive a first signal that is sent by a first device in a first time unit, the first time unit being one or more time units in an available time unit group.

Herein, the first device is an A-IoT device, the available time unit group includes a plurality of available time units, and the available time unit group is shared by a plurality of A-IoT devices.

In another aspect, the present application provides a communication device, including a memory, a processor, and a transceiver.

The memory has stored therein a computer program, and the processor executes the computer program to cause the communication device to implement the wireless communication method performed by the first device or second device as described above.

In yet another aspect, the embodiments of the present application further provide a computer-readable storage medium, having stored therein a computer program, which is loaded and executed by a processor to implement the wireless communication method as described above.

In yet another aspect, the present application further provides a chip, including an integrated circuit and an application program, where the chip is configured to operate in a communication device to cause the communication device to perform the wireless communication method as described above.

In yet another aspect, the present application provides a computer program product, including computer instructions stored in a computer readable storage medium. A processor of a communication device reads the computer instructions from the computer-readable storage medium, and the processor executes the computer instructions to cause the communication device to perform the wireless communication method as described above.

In yet another aspect, the present application provides a computer program, which is executed by a processor of a communication device to implement the wireless communication method as described above.

In the wireless communication solution provided by the embodiments of the present application, multiple A-IoT devices share the same available time unit group, and each A-IoT device performs sending of a first signal in one or more time units within the available time unit group. This solution allows that the multiple A-IoT devices performs sending of signal in respective time units within the available time unit group for signal transmission, which can avoid all A-IoT devices from sending signals at the same time, thereby reducing interference among the multiple A-IoT devices when sending signals, and improving the signal sending efficiency of the A-IoT devices.

### BRIEF DESCRIPTION OF THE DRAWINGS

In order to more clearly explain the technical solution in the embodiments of the present application, the following will briefly introduce the accompanying drawings that need to be used in the description of the embodiments. Apparently, the accompanying drawings in the following description are only some embodiments of the present application, and those with ordinary skill in the art can obtain other drawings from these drawings without exerting creative efforts.
FIG. 1 is a schematic diagram of architecture of a communication system provided by an embodiment of the present application.
FIG. 2 is a principal diagram of zero power communication according to the present application.
FIG. 3 is a principal diagram of radio frequency (RF) power harvesting according to the present application.
FIG. 4 is a principal diagram of backscatter communication according to the present application.
FIG. 5 is a circuit principal diagram of resistance-based load modulation according to the present application.
FIG. 6 is a flowchart of a wireless communication method provided by an embodiment of the present application.
FIG. 7 is a flowchart of a wireless communication method provided by an embodiment of the present application.
FIG. 8 is a flowchart of a wireless communication method provided by an embodiment of the present application.
FIG. 9 and FIG. 10 are schematic diagrams of two DO-DTT service communication windows according to embodiments of the present application.
FIG. 11 and FIG. 12 are schematic diagrams of two DO-DTT service communication windows according to embodiments of the present application.
FIG. 13 is a block diagram of a wireless communication apparatus provided by an embodiment of the present application.
FIG. 14 is a block diagram of a wireless communication apparatus provided by an embodiment of the present application.
FIG. 15 is a schematic structural diagram of a communication device provided by an embodiment of the present application.

### DETAILED DESCRIPTION

In order to make the purposes, technical solutions and advantages of the present application clearer, further detailed descriptions for the implementation of the present application are provided below in conjunction with the accompanying drawings.

The network architecture and service scenarios described in the embodiments of the present application are for the purpose of more clearly describing the technical solutions of the embodiments of the present application, and do not constitute limitation on the technical solutions provided by the embodiments of the present application. Those of ordinary skill in the art may know that with the evolution of the network architecture and emergence of new service scenarios, the technical solutions provided by the embodiments of the present application are also applicable to similar technical problems.

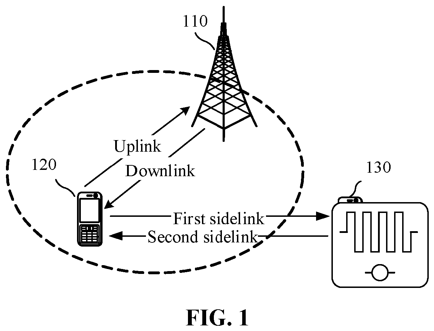

FIG. 1 is a schematic diagram of architecture of a communication system provided by an embodiment of the present application. The communication system 100 includes a network device 110, a terminal device 120, and an Ambient Internet of Things (A-IoT) 130, which is not limited in the present application.

The network device 110 in the present application provides wireless communication functions. The network device 110 includes, but is not limited to: an Evolved Node B (eNB), a Radio Network Controller (RNC), a Node B (NB), a Base Station Controller (BSC), a Base Transceiver Station (BTS), a home base station (e.g., a Home Evolved Node B, or a Home Node B (HNB)), a base band unit (BBU), an Access Point (AP) in a Wireless Fidelity (Wi-Fi) system, a wireless relay node, a wireless backhaul node, a Transmission Point (TP), or a Transmission and Reception Point (TRP). The network device may also be a Next Generation Node B (gNB) or Transmission Point (TRP or TP) in a 5th Generation (5G) mobile communication system; or one or a set (including multiple) of antenna panels of a base station in a 5G system; or may also be a network node constituting a gNB or transmission point, such as a BBU or Distributed Unit (DU), etc. Furthermore, it may be a base station in a Beyond Fifth Generation (B5G) or 6th Generation (6G) mobile communication system, or may refer to a Core Network (CN), Fronthaul network, Backhaul network, Radio Access Network (RAN), or network slice. It may also refer to a serving cell, a Primary Cell (PCell), a Primary Secondary Cell (PSCell), a Special Cell (SpCell), a Secondary Cell (SCell), or a neighboring cell for a terminal device.

The terminal device 120 in the present application may be referred to as a user equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus. The terminal includes, but is not limited to, a handheld device, a wearable device, an in-vehicle device, an Internet of Things device, and the like, for example: a mobile phone, a tablet, an e-book reader, a laptop computer, a desktop computer, a television, a game console, a Mobile Internet Device (MID), an Augmented Reality (AR) terminal, a Virtual Reality (VR) terminal, and a Mixed Reality (MR) terminal, a wearable Device, a handle, a tag, a controller, a Wireless terminal in Industrial Control, a wireless terminal in self driving, a wireless terminal in remote medical, a wireless terminal in smart grid, a wireless terminal in Transportation Safety, a wireless terminal in smart city, a wireless terminal in smart home (e.g., intelligent TV, router, intelligent speaker), a wireless terminal in remote medical surgery, a cellular phone, a cordless phone, a Session Initiation Protocol (SIP) phone, a Wireless Local Loop (WLL) station, a Personal Digital Assistant (PDA), a Set Top Box (STB), a Customer Premise Equipment (CPE) etc.

The network device 110 and the terminal device 120 communicate with each other through a certain air interface technology, such as Uu interface.

Examplarily, there are two communication scenarios between the network device 110 and the terminal device 120, including: uplink communication and downlink communication. Here, the uplink communication is to send signals to the network device 110, and the downlink communication is to send signals to the terminal device 120.

The terminal device 120 may communicate with other terminal devices through a certain air interface technology, such as a PC5 interface.

In some embodiments, there are two communication scenarios between the terminal device 120 and other terminal devices, including: first sidelink communication and second sidelink communication. The first sidelink communication is to send signals to other terminal devices, and the second sidelink communication is to send signal to the terminal device 120.

The terminal device 120 and the other terminal devices are both within the coverage of network and located in the same cell; or the terminal device 120 and the other terminal devices are both within the coverage of network but located in different cells; or the terminal device 120 is within the coverage of network but the other terminal devices are outside the coverage of network.

The A-IoT device 130 is a zero-power device based on Radio Frequency Identification (RFID).

Herein, A-IoT devices refer to devices that utilize various types of ambient energy, such as radio frequency energy, light energy, solar energy, thermal energy, mechanical energy, and other forms of ambient energy. Such devices may have no energy storage capability or have very limited energy storage capability (e.g. using a capacitor with a capacitance of several tens of microfarads, uF).

In some embodiments, A-IoT devices may form an Ambient power enabled IoT, abbreviated as Ambient IoT.

The technical solutions provided by the embodiments of the present application may be applied to various communication systems, such as a Global System of Mobile communication (GSM), a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, an Advanced Long Term Evolution (LTE-A) system, a Universal Mobile Telecommunication System (UMTS), a Worldwide Interoperability for Microwave Access (WiMAX) communication system, a 5G mobile communication system, a New Radio (NR) system, an evolution system of the NR system, a LTE-based access to unlicensed spectrum (LTE-U) system on unlicensed spectrum, an NR-based access to unlicensed spectrum (NR-U) system, a Terrestrial Networks (TN) system, a Non-Terrestrial Networks (NTN) system, Wireless Local Area Networks (WLAN), Wireless Fidelity (Wi-Fi), a cellular Internet of Things (IoT) system, a cellular passive IoT system. Or, the communication system may be applied to a future evolution system of 5G NR system, or B5G, 6G, and future evolution systems. In some embodiments of the present application, "NR" may also be referred to as a 5G NR system or a 5G system. The 5G mobile communication system may include Non-Standalone (NSA) and/or Standalone (SA) architectures.

The technical solutions provided by the embodiments of the present application may also be applied to Machine Type Communication (MTC), Long Term Evolution-Machine (LTE-M), Device to Device (D2D) network, Machine to Machine (M2M) network, Internet of Things (IoT) network, or other networks. The IoT network may include, for example, Internet of Vehicles. The communication methods adopted within a vehicle-to-everything (V2X) system are collectively referred to as Vehicle-to-Everything (V2X), where X may represent anything. For example, V2X may include: Vehicle-to-Vehicle (V2V) communication, Vehicle-to-Infrastructure (V2I) communication, Vehicle-to-Pedestrian (V2P) communication, Vehicle-to-Network (V2N) communication, and the like.

### 1) A-IoT Communication Technology

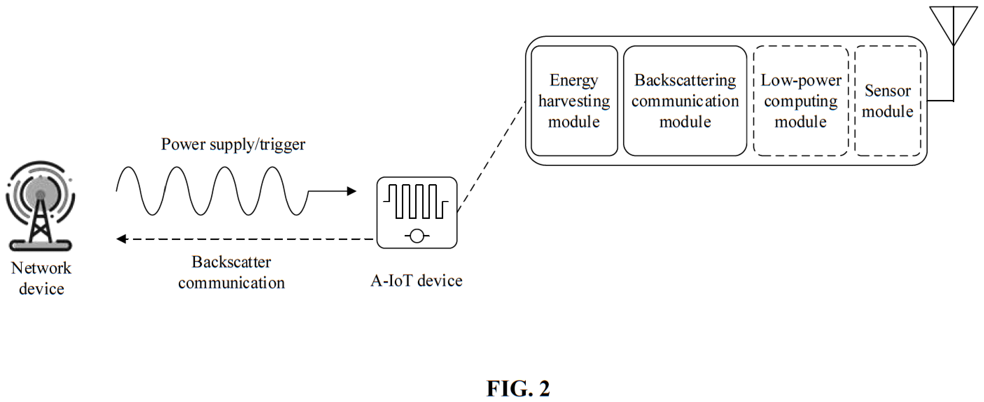

A-IoT communication may adopt energy harvesting and backscattering communication technologies. The A-IoT communication network is composed of a network device and an A-IoT device as illustrated in FIG. 2, and FIG. 2 illustrates a structure diagram of an A-IoT communication system according to the present application. The network device is used to send a wireless power supply signal and a downlink communication signal to the A-IoT device, and receive a backscatter signal from the A-IoT device. A basic A-IoT device includes an energy harvesting module, a backscattering communication module, and a low-power computing module. In addition, the A-IoT device may also include a memory or a sensor for storing some basic information (e.g., item identification, etc.) or for obtaining sensing data such as ambient temperature and ambient humidity.

The key technologies of A-IoT communication mainly include RF power harvesting and backscattering communication.

### - RF Power Harvesting

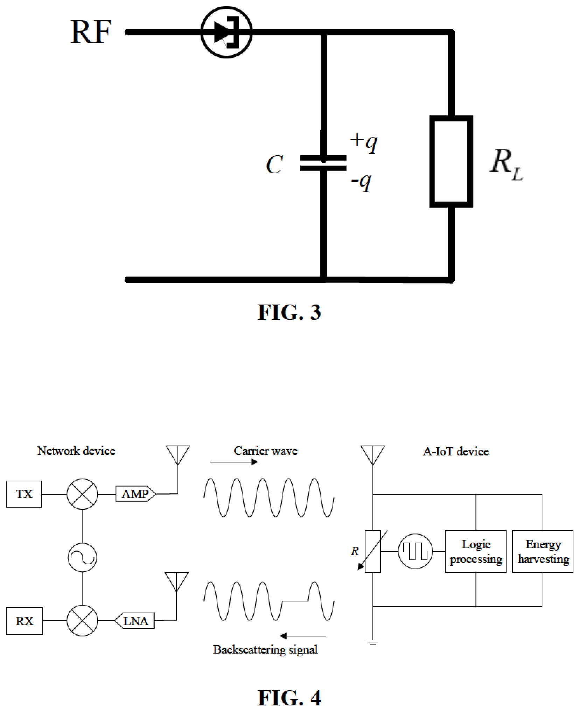

FIG. 3 illustrates a principal diagram of RF power harvesting according to the present application. As illustrated in FIG. 3, the RF power harvesting module collects electromagnetic wave energy in space based on the electromagnetic induction principle, to obtain energy required to drive the A-IoT device, so as to, for example, drive a low power demodulation and modulation module, a sensor, a memory reader, and the like. Therefore, the A-IoT device does not need using conventional batteries.

### - Back Scattering

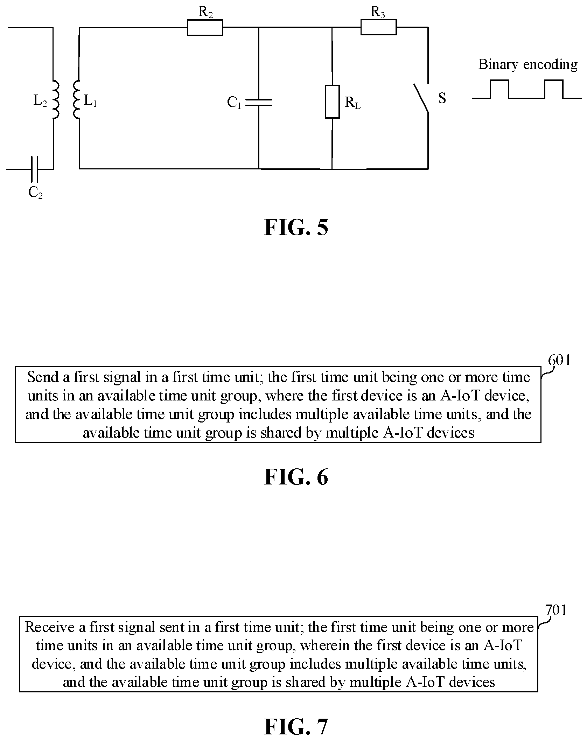

FIG. 4 illustrates a principal diagram of backscatter communication according to the present application. As illustrated in FIG. 4, an A-IoT device receives a wireless signal sent by a network, modulates the wireless signal, loads information to be sent, and radiates the modulated signal from antennas. This information transmission process is called back scattering communication. Backscatter and load modulation functions are inseparable. For the load modulation, circuit parameters of the oscillation loop in the A-IoT device are adjusted and controlled according to the beat of data stream, so that parameters such as the magnitude of the electronic tag impedance change accordingly, to complete the modulation process. The load modulation mainly includes two methods: resistance-based load modulation and capacitor-based load modulation. For resistance-based load modulation, a resistor is connected in parallel to the load, and the resistor is turned on or turned off based on the control of the binary data stream. FIG. 5 illustrates a circuit principal diagram of resistance-based load modulation according to the present application. The on/off of the resistor will lead to the change of circuit voltage, thus achieving Amplitude-Shift Keying (ASK). That is, signal modulation and transmission is realized by adjusting the amplitude of backscatter signal from the A-IoT device. Similarly, for capacitor-based load modulation, the capacitor is turned on or off to achieve a change in the circuit resonance frequency, thus achieving Frequency-Shift Keying (FSK). That is, signal modulation and transmission is realized by adjusting the operating Frequency of the backscatter signal from the A-IoT device.

It can be seen that the A-IoT device performs information modulation on the incoming wave signal by means of load modulation, thus realizing the backscatter communication process. Therefore, the A-IoT device has the following significant advantages:
(1) A-IoT device does not actively transmit signals, so it does not require a complex RF structure, such as Power Amplifier (PA), RF filter, etc;
(2) A-IoT device does not need to actively generate high-frequency signals, so it does not require a high-frequency crystal oscillator;
(3) By virtue of backscatter communication, the signal transmission of terminal does not consume the energy of A-IoT device itself.

### 2) Coding

The data transmitted by electronic tags can use different forms of codes to represent binary "1" and "0". Radio frequency identification (RFID) systems typically use one of the following encoding methods: Non Return Zero (NRZ) encoding, Manchester encoding, Unipolar RZ encoding, Differential Binary Phase (DBP) encoding, Miller encoding, and differential encoding. In layman's terms, different pulse signals are used to represent 0 and 1.

### 3) Classification of zero-power terminals

Based on the energy source and usage mode of zero-power terminals, the terminals can be classified as follows.

### I. Passive zero-power terminal

A zero-power terminal does not need to carry a battery inside. When approaching a network device (e.g., a reader in the RFID system), the zero-power terminal is in the near-field range formed by the radiation of antennas of the network device. Therefore, the antennas of the zero-power terminal generate an induced current through electromagnetic induction, and the induced current drives the low power chip circuit of the zero-power terminal, to realize demodulation of a forward link signal and signal modulation for a backward link. For the backward link, the zero-power terminal performs signal transmission through backscattering or low-power active transmission manner.

It can be seen that the passive zero-power terminal does not need to carry a battery inside to drive either the forward link or the backward link, making it a true zero-power terminal.

The passive zero-power terminal does not need a battery, and both its RF circuit and baseband circuit are very simple. For example, it does not need components such as a Low Noise Amplifier (LNA), a power Amplifier (PA), a crystal oscillator, an Analog to Digital Converter (ADC). Therefore, it offers many advantages, including small size, light weight, ultra-low cost, and long service life.

The passive zero-power terminal may also support other energy harvesting methods, and it obtains energy to drive its circuits by harvesting ambient energy (e.g., light, heat, kinetic energy, mechanical energy, etc.) to enable communication of the terminal device.

### II. Semi-passive zero-power terminal

A semi-passive zero power terminal itself is not equipped with conventional batteries, but it can use an RF energy harvesting module to collect radio wave energy or use an energy harvesting module to collect ambient energy (e.g., solar energy, thermal energy, mechanical vibration energy, etc.), and simultaneously store the collected energy in an energy storage unit (e.g., a capacitor). After the energy storage unit obtains the energy, it can drive the low-power chip circuit of the zero-power terminal, to realize demodulation of the forward link signal and signal modulation for a backward link. For the backward link, the zero-power terminal performs signal transmission through backscattering or low-power active transmission manner.

It can be seen that the semi-passive zero-power terminal does not need a battery to drive either the forward link or the backward link. Although it uses energy stored in a capacitor during operation, the energy comes from radio energy collected by the energy harvesting module, and thus it is also a true zero-power terminal.

The semi-passive zero-power terminal inherits many advantages of the passive zero-power terminal, so it has many advantages such as small size, light weight, ultra-low cost and long service life.

### III. Active zero-power terminal

The zero-power terminal used in some scenarios may also be an active zero-power terminal, which can carry a battery inside. The battery is used to drive low-power chip circuit of the zero-power terminal to realize demodulation of the forward link signal and signal modulation for a backward link. However, for the backward link, the zero-power terminal uses the backscattering or the active transmission manner to achieve signal transmission. Although a battery is inside, this type of active zero-power terminal has extremely low power consumption and complexity, and thus it can have a battery with smaller capacity, thus achieving low cost and small size. The battery inside may also serve as an energy storage unit for the energy harvesting module to store the harvested ambient energy, thus achieving a long maintenance cycle or even maintenance-free.

The active zero-power terminal is powered by a built-in battery to increase the communication distance of the zero-power terminal and to improve the communication reliability. Therefore, it may be applied in scenarios where relatively high requirements are placed on communication distance, read latency, and the like.

Partial zero-power terminals, such as semi-passive zero-power terminals or active zero-power terminals, may have active transmission capability, that is, for the backward link, in addition to communication via backscattering, active transmission can also be used.

Classification of zero-power devices based on transmitter type:
The service types of zero-power IoT and other IoT service types will mainly be uplink-based services:

### I. Backscatter-based zero-power devices

Such zero-power devices use the aforementioned backscattering method to send uplink data. These devices do not have an active transmitter capable of active transmission, but only have a backscatter transmitter. Therefore, when such a terminal performs sending of data, a network device is required to provide a carrier wave, and the terminal device performs backscattering based on the carrier wave to realize data transmission.

### II. Zero-power devices based on active transmitters

Such zero-power devices use an active transmitter with active transmission capability for uplink data transmission. Therefore, when these zero-power devices send data, they can send using their own active transmitters without requiring a network device to provide a carrier wave. The active transmitters suitable for zero-power devices include ultra-low-power Amplitude Shift Keying (ASK) transmitters, ultra-low-power Frequency Shift Keying (FSK) transmitters, etc. Based on current implementations, when such a transmitter transmits a signal of 100 uw, its overall power consumption can be reduced to 400 ~ 600 uw.

### III. Zero-power devices having both backscatter and an active transmitter

Such terminals can support both backscattering and an active transmitter The terminal may determine which uplink signal transmission mode to use, whether to use backscattering or to use the active transmitter for active transmission, depending upon different situations (e.g., power level, available ambient energy) or based on scheduling by the network device.

### 4) Cellular passive IoT

Cellular IoT is booming. For example, 3GPP has standardized IoT technologies such as NB-IoT, MTC, and RedCap. However, there are still many scenarios where IoT communication requirements cannot be met by existing technologies, for example:

### I. Harsh communication environment

Certain IoT scenarios may involve extreme environment such as high temperature, extremely low temperature, high humidity, high pressure, high radiation or high-speed motion, for example, ultra-high voltage substation, high-speed train track monitoring, cold-zone environmental monitoring, industrial production lines, etc. In these scenarios, due to the limitations of conventional power supplies in operating environments, existing IoT terminals cannot function. Moreover, extreme operating environments are not conducive to IoT maintenance, such as battery replacement.

### II. Extremely small-size terminal form requirements

Certain IoT communication scenarios, such as food traceability, commodity circulation, and smart wearable, require terminals to have small small size for ease of use in these scenarios. For example, IoT terminals for commodity management in the circulation link usually use the form of electronic tags, embedded in commodity packaging in a very small form. For another example, lightweight wearable devices can improve user experience while meeting user needs.

### III. Extremely low-cost IoT communication requirements

Many IoT communication scenarios demand sufficiently low-cost IoT terminals to improve competitiveness against alternative technologies. For example, in logistics or warehousing scenarios, in order to facilitate the management of a large number of circulating items, IoT terminals may be attached to each item, so that the precise management of the whole process and cycle of logistics can be realized through the communication between the terminal and the logistics network. These scenarios require the price of IoT terminals to be competitive enough.

With the increase of applications in 5G industry, the types and scenarios of connected things are growing, placing higher demand on the price and power consumption of communication terminals. The application of battery-free and low-cost passive IoT devices has become the key technology for cellular IoT, enriching the types and number of connected terminals in 5G networks, thereby truly enabling the Internet of Everything.

During standardization discussion, zero-power IoT can also be called Ambient power enabled IoT, abbreviated as Ambient IoT. It is also called passive IoT in some technical literatures. The Ambient IoT device means an IoT device that uses various ambient energy, for example radio frequency energy, light energy, solar energy, thermal energy, mechanical energy, etc., to power itself. Such a device may have no energy storage capability or may have a very limited energy storage capability (e.g., using a capacitor of several tens of microfarads). Compared with existing IoT devices, the Ambient IoT device has many advantages, including being battery-free, maintenance-free, having small-size form, low complexity and low cost, and long lifespan. Ambient IoT can be widely used across various industries, such as vertical-specific logistics, smart warehousing, smart agriculture, energy and power, industrial internet, etc., as well as personal applications, like smart wearables and smart homes.

Based on the discussion of Ambient IoT application scenarios in 3GPP SA1, Ambient IoT can be used for at least the following four types of scenarios:
I. Object identification, such as logistics, production line product management, supply chain management;
II. Environmental monitoring, such as temperature, humidity and hazardous gas monitoring in working or natural environments;
III. Positioning, such as indoor positioning, smart item finding, production line item positioning, etc.;
IV. Intelligent control, such as intelligent control of various electrical appliances in smart home (turning air conditioners on/off, adjusting temperature), intelligent control of various facilities in agricultural greenhouse (automatic irrigation, fertilization).

### 5) Ambient IoT

In NR system and WiFi system, battery-free and low cost devices can support low-cost, large-scale deployment and maintenance-free operation of IoT devices. At present, the standard is studying how to support ambient energy-based IoT devices in NR and WiFi systems, referred to as Ambient IoT or AMP IoT devices. The energy required for their operation is harvested from ambient energy, which may originated from radio signals, solar energy, thermal energy, etc. Such devices are similar to passive or semi-passive devices in zero-power communication.

In 3GPP RAN, a study project on Ambient IoT devices has been conducted, and the Ambient IoT devices are classified into the following three types of devices, each with corresponding complexity and communication capabilities.

Device A: it does not have energy storage capability and cannot perform independent signal transmission, that is, it adopts backscatter transmission.

Device B: it has energy storage capability but cannot perform independent signal transmission, that is, it adopts backscatter transmission, and can amplify the backscattered signal by using the stored energy.

Device C: it has energy storage capability and can perform independent signal transmission, that is, it has active transmission capability.

Among them, the device A has the lowest complexity and power consumption, which can be as low as 1 µW, but its communication range is limited, typically only a few meters. The device A requires a network device to provide a carrier signal for backscatter transmission. The device C generally has a large capacitor to store harvested ambient energy, supports power consumption of several hundred µW, and can support active signal transmission with a longer communication distance. The device C does not require a network device to provide a carrier signal because it can perform active transmission. The device B has complexity and power consumption between those of device A and device C.

In addition, zero-power terminals support harvesting various types of energy, such as radio frequency energy, solar energy, thermal energy, mechanical energy, etc. Among these, zero-power terminals based on RF energy harvesting may require the network to provide an RF power supply signal.

The overall objective of the Ambient IoT research project in 3GPP is to study a unified air interface design with minimal difference (if necessary), to enable the following devices:
i. about 1uW peak power consumption, has energy storage, initial sampling frequency offset (SFO) up to 10x ppm, neither downlink (DL) nor uplink (UL) amplification in the device. The device's UL transmission is backscattered on a carrier wave provided externally.
ii. less than a few hundred uW peak power consumption, has energy storage, initial sampling frequency offset up to 10x ppm, both DL and/or UL amplification in the device. The device's UL transmission may be generated internally (active transmission), or be backscattered on a carrier wave provided externally.

The peak power consumption of Type 1 terminal is lower than that of Type 2 terminals. UL transmission of Type 1 terminals uses backscatter communication, similar to the compromise between device A and device B in the RAN research report (having energy storage capability but unable to amplify signals). Type 2 terminals have higher peak power consumption, and UL transmission can be either active or backscattering. When using active transmission for UL transmission, they are similar to device C in the RAN study report; and when using backscatter communication for UL transmission, they are similar to device B.

Services such as DT, DO, DO-A, DO-DTT for Ambient IoT have been discussed in R19. The services have the following characteristics:
Device-Originated (DO): communication initiated by a terminal. For an Ambient IoT device, it means that the Ambient IoT device sends to a network device and/or an intermediate node device signaling/data (either actively or based on trigger), such as Ambient IoT data reporting, data transmission, etc.

Device-Terminated (DT): communication terminated by the terminal. For an Ambient IoT device, it means that the network device and/or the intermediate node sends signaling/data to the terminal. For example, as for a controller based on the Ambient IoT device, it may be that the network device sends control signaling to the Ambient IoT device, and the Ambient IoT device performs corresponding operations (network-controlled switching of a smart device).

Device-Originated - Autonomous (DO-A): communication initiated autonomously by a terminal device. This is a type of DO, such as an alarm.

Device-Originated - Device-Terminated Triggered (DO-DTT): communication triggered by the network, originated by the terminal, and terminated by the terminal, for example, asset inventory service.

The Ambient IoT devices have low complexity and low cost, and may be maintenance-free and battery-free. They may obtain energy required for communication from environment through energy harvesting, and communicate using backscatter or low-power active transmission. They may enable large density and large-scale deployments at a lower cost.

For Ambient IoT devices, they can be used for asset inventory, i.e., DO-DTT services. The asset inventory for Ambient IoT devices may be triggered by the network device, or the asset inventory for the Ambient IoT devices may be triggered by the network device with the help of intermediate nodes.

In DO-DTT services, a large number of Ambient IoT devices need to be inventoried simultaneously. If they are inventoried one by one, it would take a long time to complete the inventory for the large number of Ambient IoT devices, which generally cannot meet practical requirements. If all Ambient IoT devices are triggered simultaneously for asset inventory, interference would be cause due to all Ambient IoT devices performing communication, and the network device would not be able to perform correct reception at the same time.

Subsequent embodiments of the present application provide a wireless communication solution, which may be used for DO-DTT service transmission between a network device/relay device and an Ambient IoT.

FIG. 6 illustrates a flowchart of a wireless communication method provided by an embodiment of the present application. The method may be performed by a first device, and the first device may be the A-IoT device 130 in the network architecture illustrated in FIG. 1. The method may include operation 601.

In operation 601, a first signal is sent by the first device in a first time unit, the first time unit being one or more time units in an available time unit group, where the first device is an A-IoT device, the available time unit group includes multiple available time units, and the available time unit group is shared by multiple A-IoT devices.

In embodiments of the present application, the first signal may be a signal for carrying service data of a specific service. For example, the specific service may be a DO-DTT service, or the specific service may be a DO service, a DO-A service, or the like.

Optionally, the time unit described above may be a transmission opportunity.

One available time unit group may include multiple available time units, and the available time units may refer to time units where sending of signal may be performed by an A-IoT device.

In the embodiments of the present application, each available time unit group may be shared by multiple A-IoT devices, that is, the multiple A-IoT devices may send signals on one or partial or all of the available time units in the available time unit group. Herein, for two A-IoT devices among the multiple A-IoT devices, the two A-IoT devices may send signals on the same available time unit within the available time unit group, or the two A-IoT devices may send signals on different available time units within the available time unit group, or the available time units in which the two A-IoT devices send signals may be partially overlapped.

In summary, in the solution of the embodiments of the present application, multiple A-IoT devices share the same available time unit group, and each A-IoT device sends the first signal in one or more time units within the available time unit group. This solution allows that multiple A-IoT devices send signals on respective time units in the available time unit group, and can avoid all A-IoT devices from sending signals simultaneously, thereby reducing interference among multiple A-IoT devices when sending signals, and improving the signal transmission efficiency of the A-IoT devices.

FIG. 7 illustrates a flowchart of a wireless communication method provided by an embodiment of the present application. The method may be performed by a second device, and the second device may be the network device 110 in the network architecture illustrated in FIG. 1, or the second device may be a relay device located between the first device and the network device (for example, the relay device may be a user terminal device, another A-IoT device, or another IoT device other than the A-IoT device). The method may include operation 701.

In operation 701, a first signal sent by a first device in the first time unit is received by the second device, the first time unit being one or more time units in an available time unit group, where the first device is an A-IoT device, the available time unit group includes multiple available time units, and the available time unit group is shared by multiple A-IoT devices.

In summary, in the solution of the embodiments of the present application, multiple A-IoT devices share the same available time unit group, and each A-IoT device sends the first signal in one or more time units within the available time unit group. This solution allows that multiple A-IoT devices send signals on respective time unit in the available time unit group, and can avoid all A-IoT devices from sending signals simultaneously, thereby reducing interference among multiple A-IoT devices when sending signals, and improving the signal transmission efficiency of the A-IoT devices.

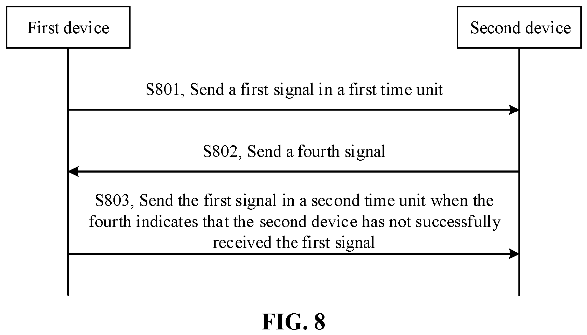

On the basis of the solution of FIG. 6 or FIG. 7, FIG. 8 illustrates a flowchart of a wireless communication method provided by an embodiment of the present application. The method may be performed through interaction between a first device and a second device, the first device may be the A-IoT device 130 in the network architecture illustrated in FIG. 1, and the second device may be the network device 110 in the network architecture illustrated in FIG. 1 or the second device may be a relay device. The method may include operations S801, S802, S803.

In S801, the first device sends a first signal in a first time unit. Correspondingly, the second device receives the first signal that is sent by the first device in the first time unit.

The first time unit includes one or more time units in an available time unit group, where the first device is an A-IoT device, the available time unit group includes multiple available time units, and the available time unit group is shared by multiple A-IoT devices.

In some embodiments, the available time unit group includes multiple available time units in a first time window; or
the available time unit group is determined by a time domain position of a first available time unit in the available time unit group and a time interval between the first available time unit and a last available time unit in the available time unit group; or
the available time unit group is determined by a time domain position of a last available time unit in the available time unit group and a time interval between a first available time unit and the last available time unit in available time unit group.

In an exemplary solution, the available time unit group may be associated with a first time window. That is, the multiple available time units included in the first time window (e.g., all or partial of the available time units in the first time window) constitute the available time unit group.

In another exemplary solution, the available time unit group may be associated with a first or last available time unit and a time interval between the first and last available time units in the available time unit group. That is, starting from the first available time unit, all available time units in a subsequent time interval constitute the available time unit group; or, starting from the last available time unit, all available time units in a previous time interval constitute the available time unit group.

According to the solution in the above embodiments of the present application, the available time unit group may be determined based on a time window, or the available time unit group may be determined directly by a combination of a single available time unit and a time interval, thereby ensuring flexibility in determining the available time unit group.

In some embodiments, the first time unit is determined from the available time unit group through one or more of following manners: predefined by a protocol, dynamically configured by a second device, semi-statically configured by the second device, determined based on identification information of the second device, determined based on identification information of the first device, or randomly determined.

In embodiments of the present application, the first device may determine one or more available time units from the available time unit group as the first time unit above.

For example, the first device may determine an available time unit(s), predefined by a protocol, in the available time unit group as the first time unit or as part of the first time unit. For example, a specific available time unit among the available time units may be predefined by the protocol as an available time unit in which multiple A-IoT devices may all send signals.

For another example, the first device may determine, according to dynamic configuration information from the second device, one or more available time units from the available time unit group as the first time unit.

For another example, the first device may determine, according to semi-static configuration information from the second device, one or more available time units from the available time unit group as the first time unit.

For another example, the first device may determine one or more available time units from the available time unit group as the first time unit according to the semi-static configuration information and the dynamic configuration information from the second device.

For another example, the first device may determine, according to its own identification information (e.g., Identity (ID)), one or more available time units from the available time unit group as the first time unit. For example, the first device may use its own ID to perform a modulo operation on numberings of respective available time units in the available time unit group, and determine one or more available time units from the available time unit group as the first time unit based on the result of the modulo operation.

For another example, the first device may determine one or more available time units from available time unit group as the first time unit according to identification information (e.g., ID) of the second device. For example, the first device may use the ID of the second device to perform a modulo operation on numberings of respective available time units in the available time unit group, and determine one or more available time units from the available time unit group as the first time unit based on the result of the modulo operation.

For another example, the first device may randomly determine one or more available time units from the available time unit group as the first time unit.

Through the solution in the above embodiments of the present application, each of A-IoT devices may independently determine one or more available time units from the available time unit group to send signals, so that different A-IoT devices may send signals in different available time units of the available time unit group, which avoids all A-IoT devices from sending signals simultaneously, thereby reducing interference among multiple A-IoT devices when sending signals, and improving the signal transmission efficiency of the A-IoT devices.

In some embodiments, the first signal includes one or more of the following:
information for synchronization, identification information of the first device, control signaling, or service data.

In the embodiments of the present application, the information for synchronization may be used to realize synchronization with the first device by the second device.

The identification information of the first device may be used to indicate the sender for the first signal.

The control signaling may be used to indicate relevant configuration (e.g., data length, data type, etc.) for the first device to send the first information, and/or used to negotiate relevant configuration (e.g., feedback time) for receiving feedback information.

The service data is data related to a service type corresponding to the first signal, such as DO-DTT data.

In some embodiments, the sending the first signal in the first time unit includes: sending the first signal in the first time unit by the first device in a code division multiplexing manner and/or a frequency division multiplexing manner. Correspondingly, the second device receives the first signal that is sent by the first device in the first time unit in a code division multiplexing scheme and/or a frequency division multiplexing manner.

In the embodiments of the present application, among multiple A-IoT devices sharing the available time unit group, part of the A-IoT devices may select the same or partially same available time units for signal transmission. In this case, each of the A-IoT devices may also send signals in the selected available time unit(s) through code division multiplexing and/or frequency division multiplexing manner, thereby further reducing interference among multiple A-IoT devices when sending signals, and improving the signal transmission efficiency of the A-IoT devices.

In some embodiments, the sending the first signal in the first time unit includes: sending the first signal in the first time unit through a spreading manner by the first device. Correspondingly, the second device receives the first signal that is sent by the first device in the first time unit through a spreading manner.

In the embodiment of the present application, among multiple A-IoT devices sharing the available time unit group, part of the A-IoT devices may select the same or partially same available time units for signal transmission. In this case, each of the A-IoT devices may also sends the first signal in the selected available time unit(s) through the spreading manner, thereby further reducing the interference among the multiple A-IoT devices when sending signals, and improving the signal transmission efficiency of the A-IoT devices.

In some embodiments, a spreading sequence corresponding to the spreading manner is determined by one or more of the following: determined based on identification information of the first device, or configured by the second device.

In the embodiments of the present application, when an A-IoT device performs signal transmission through a spreading manner, it may determine a spreading sequence to be used for sending of signal based on its own identification information, for example, by performing a modulo operation on the numbering of spreading sequences using its own ID, and determining the spreading sequence to be used for signal transmission based on the result of the modulo operation; and/or, an A-IoT device can determine the spreading sequence to be used for sending of signal based on configuration information sent by a second device to the A-IoT device, for example, the A-IoT device may determine the spreading sequence to be used for sending of signal based on semi-static configuration information and/or dynamical configuration information from the second device.

In the embodiments of the present application, the multiple A-IoT devices sharing the available time unit group may determine the spreading sequence to be used for sending of signal based on their own identification information and/or the configuration information from the second device. In this way, it is ensured that different A-IoT devices can use different spreading sequences as much as possible for sending of signal through the spreading manner, thereby further reducing interference among multiple A-IoT devices when sending signals, and improving the signal transmission efficiency of the A-IoT devices.

In some embodiments, the spreading manner includes: superimposing a spreading sequence on each Orthogonal Frequency Division Multiplexing (OFDM) symbol corresponding to the first signal; or, modulating a spreading sequence obtained by performing spreading on each bit corresponding to the first signal.

In the embodiments of the present application, the A-IoT device may perform spreading transmission through different spreading manners, thereby ensuring the flexibility of spreading transmission.

In some embodiments, the first signal is sent once within the available time unit group, or the first signal is repeatedly sent multiple times within the available time unit group.

In the embodiments of the present application, the A-IoT device may perform sending of signal once within the available time unit group, thereby avoiding interference among multiple A-IoT devices when sending signals as much as possible, and improving the signal transmission efficiency of the A-IoT devices.

Or, the A-IoT device may repeatedly perform sending of signal multiple times within the available time unit group, thereby guaranteeing the success rate of signal transmission.

Or, some of the multiple A-IoT devices may perform sending of signal once within the available time unit group, while other A-IoT devices may perform sending of signal multiple times repeatedly within the available time unit group. For example, the multiple A-IoT devices may have respective priorities, wherein A-IoT devices with a lower priority among the multiple A-IoT devices may perform sending of signal once within the available time unit group, and A-IoT devices with a higher priority may perform sending of signal multiple times repeatedly within the available time unit group.

In some embodiments, when the available time unit group includes multiple available time units in the first time window, a length of the first time window is determined by one or more of following manner: predefined by a protocol, dynamically configured by the second device, or semi-statically configured by the second device.

In the embodiments of the present application, the length of the first time window may be a fixed length predefined by the protocol. In this solution, the determination of the first time window is simpler, which can ensure the efficiency in determining the first time window and thus guarantee transmission efficiency. Or, the length of the first time window may be configured for the A-IoT device by a second device in a semi-static and/or dynamic manner, which can improve the flexibility of the first time window.

In some embodiments, when the available time unit group includes multiple available time units in the first time window, a start time point and/or an end time point of the first time window is associated with a time domain position of a second signal and a first time interval. The first time interval is a time interval between the start time point and/or the end time point of the first time window and the time domain position of the second signal.

In the embodiments of the present application, the start time point and/or the end time point of the first time window may be determined based on the time domain position of a second signal sent by the second device and one time interval (i.e., the first time interval), so that the first time window may be indicated by the second signal, thereby guaranteeing the flexibility of the configuration for the first time window.

In some embodiments, the first time interval is determined through one or more of the following: predefinition by a protocol, dynamically configuration by the second device, or semi-statically configuration by the second device.

In the embodiments of the present application, the length of the first time interval may be a fixed length predefined by the protocol. In this solution, the determination of the first time interval is simpler, which can ensure the efficiency in determining the first time window and thus guarantee transmission efficiency. Or, the length of the first time interval may be configured for the A-IoT device by a second device in a semi-static and/or dynamic manner, which can improve the flexibility of the first time window.

In some embodiments, when the available time unit group includes multiple available time units in the first time window, the first time window is determined by one or more of the following information:
a start time point of the first time window and a length of the first time window;
an end time point of the first time window and a length of the first time window; or
a start time point of the first time window and an end time point of the first time window.

In the embodiments of the present application, the first time window may be determined by any two or three of: the start time point of the first time window, the end time point of the first time window, or the length of the first time window, which can guarantee the flexibility in the indication of the first time window.

In some embodiments, the second signal is used to schedule/trigger/control an A-IoT device to perform data transmission service; and/or the second signal is used for synchronizing the first device with the second device.

The second signal may be a signal for scheduling/triggering/controlling the A-IoT device to perform data transmission service, and/or the second signal may be a signal for the first device to synchronize with the second device, where the signal may be multiplexed to indicate the first time window. In this way, no additional signal is needed to indicate the first time window, thereby saving signaling resources.

In another possible implementation, the second signal may be a signal dedicated to indicating the available time unit group. For example, the second signal may be a signal dedicated to indicating the first time window.

In some embodiments, the second signal is a signal sent periodically, or the second signal is a signal sent on demand.

That is, the second signal may be a signal that is periodically sent by the second device. In this way, the indication of the available time unit group is simpler, and the efficiency of determining the available time unit group/first time window is relatively high. Alternatively, the second signal may also be a signal sent on demand, which can save signaling resources.

In some embodiments, the second signal is used to indicate a single first time window; or the second signal is used to indicate multiple first time windows; or the second signal is used to indicate the first time window that occurs periodically.

In the embodiments of the present application, the second signal may be used to indicate a single first time window, and different first time windows may be indicated by different second signals, which can ensure the flexibility of the indication of the first time window. In another possible manner, the second signal may indicate multiple first time windows at a time, or the second signal may indicate the periodically occurring first time window, thereby saving signaling resources.

In some embodiments, when the second signal is used to indicate a single first time window,
A-IoT devices corresponding to first time windows indicated by two adjacent second signals are the same; or
A-IoT devices corresponding to first time windows indicated by two adjacent second signals are different; or
A-IoT devices corresponding to first time windows indicated by two adjacent second signals are partially the same.

In the embodiments of the present application, when the second signal is used to indicate a single first time window, the A-IoT devices corresponding to the first time windows indicated by two consecutive second signals may be the same, so that a group of A-IoT devices can send signals in multiple first time windows, thereby ensuring the success rate of signal transmission for the group of A-IoT devices. Or, the A-IoT devices corresponding to the first time windows indicated by two adjacent second signals may be different, that is, different second signals can be used to schedule different groups of A-IoT devices for signal transmission, thereby increasing system capacity. Or, the A-IoT devices corresponding to the first time windows indicated by two adjacent second signals may be partially the same, thereby ensuring the flexibility of scheduling A-IoT devices for signal transmission.

In some embodiments, when the second signal is used to indicate multiple first time windows, or the second signal is used to indicate the first time window that occurs periodically, different first time windows indicated by the second signal correspond to the same A-IoT device; or different first time windows indicated by the second signal correspond to different A-IoT device groups.

In the embodiments of the present application, when the second signal is used to indicate multiple first time windows, or the second signal is used to indicate the first time window that occurs periodically, A-IoT devices sending signals may be the same in different first time windows indicated by the second signal, thereby ensuring the success rate of signal sending for a group of multiple A-IoT devices. Or, A-IoT devices sending signals may be different in different first time windows indicated by the second signal, thereby ensuring the flexibility of scheduling A-IoT devices for signal transmission.

In some embodiments, when different first time windows indicated by the second signal correspond to different A-IoT device groups, an association relationship between the first time windows and the A-IoT device groups is determined by one or more of following manners:
predefined by a protocol, dynamically configured by a second device, semi-statically configured by the second device, randomly determined, or determined based on identification information of the A-IoT device groups.

In the embodiments of the present application, when different first time windows indicated by the second signal correspond to different A-IoT device groups, the association relationship between each of the A-IoT device groups and each of the first time windows may be predefined by a protocol. For example, the protocol predefines an association relationship between the first time windows of respective numberings and the A-IoT device groups of respective numberings (which may be in one-to-one, one-to-many, or many-to-one association). In this solution, the determination of the association relationship between each of the A-IoT device groups and each of the first time windows is simpler, which can ensure the efficiency of determining the relationship between the A-IoT device groups and the first time windows.

Alternatively, the association relationship between the A-IoT device groups and the first time windows may be semi-statically and/or dynamically configured by the second device. This solution can ensure controllability of the association relationship between the A-IoT device groups and the first time windows.

Alternatively, the association relationship between the A-IoT device groups and the first time windows may be randomly determined, thereby ensuring that different first time windows can be distributed to respective A-IoT devices for signal transmission.

Alternatively, the association relationship between the A-IoT device groups and the first time windows may be determined based on the identification information of the A-IoT device groups, for example, by using the ID of the A-IoT device groups to perform a modulo operation on the numberings of the first time windows, and determining the association relationship between the A-IoT device groups and the first time windows based on the result of the modulo operation, thereby ensuring that the association relationship between the A-IoT device groups and the first time windows is sufficiently clear.

In some embodiments, when the second signal is used to indicate the first time window that occurs periodically, the periodically occurring first time window is triggered to terminate by a third signal.

In the embodiments of the present application, when the second signal is used to indicate the first time window that occurs periodically, the second device can trigger the termination of the periodically occurring first time window through the third signal, thereby saving communication resources.

In S802, the second device sends a fourth signal to the first device. Correspondingly, the first device receives the fourth signal sent by the second device. The fourth signal is used to indicate whether the second device has successfully received the first signal.

In the embodiments of the present application, after the first device sends the first signal in the first time unit, the second device can feed back the reception situation of the first signal to the first device through the fourth signal, to trigger the first device to stop sending the first signal when the transmission of the first signal is successful, or to trigger the first device to continue sending the first signal when the transmission of the first signal fails, thereby ensuring the success rate of signal transmission between the A-IoT device and the second device while avoiding resource waste.

In S803, when the fourth signal indicates that the second device has not successfully received the first signal, the first device transmits the first signal in a second time unit. Correspondingly, the second device receives the first signal transmitted by the first device in the second time unit. The second time unit is one or more time units in the next available time unit group.

In some embodiments, the fourth signal corresponds to multiple A-IoT devices sharing the available time unit group, or the fourth signal corresponds to an A-IoT device that sends the signal in the first time unit.

In the embodiments of the present application, the fourth signal may indicate whether multiple A-IoT devices sharing the available time unit group has successfully sent the signal (for example, the fourth signal may include identification information of an A-IoT device(s) whose signal transmission is successful), thereby realizing indication of the signal transmission situation of multiple A-IoT devices through a single signal and saving communication resources.

Alternatively, the fourth signal may individually indicate the signal transmission situation corresponding to each of the A-IoT devices sending the signal in the first time unit, thereby enabling feedback of signal transmission results in a time-unit granularity and ensuring the efficiency of feedback of signal transmission results.

In some embodiments, when the fourth signal corresponds to multiple A-IoT devices sharing the available time unit group, a time domain position of the fourth signal is associated with a time domain position of the second signal.

In the embodiments of the present application, when the fourth signal corresponds to multiple A-IoT devices sharing the available time unit group, the time domain position of the fourth signal can be determined based on the time domain position of the second signal, thereby ensuring that the A-IoT devices can clearly know the time at which the second device feeds back the signal transmission situation, and ensuring the accuracy of feedback information reception.

In some embodiments, when the fourth signal corresponds to multiple A-IoT devices sharing the available time unit group, the fourth signal is associated with the available time unit group.

In the embodiments of the present application, when the fourth signal corresponds to multiple A-IoT devices sharing the available time unit group, the time domain position of the fourth signal can be determined by the time domain position of the available time unit group, thereby ensuring that the A-IoT devices can clearly know the time at which the second device feeds back the signal transmission situation, and ensuring the accuracy of feedback information reception.

In some embodiments, when the fourth signal corresponds to multiple A-IoT devices sharing the available time unit group, the fourth signal is associated with a time domain position of a first available time unit in the available time unit group and/or a time domain position of a last available time unit in the available time unit group.

In the embodiments of the present application, when the fourth signal corresponds to multiple A-IoT devices sharing the available time unit group, the time domain position of the fourth signal can be determined by the time domain position of the first or last available time unit in the available time unit group, thereby ensuring that the A-IoT device can clearly know the time at which the second device feeds back signal transmission situation, and ensuring the accuracy of feedback information reception.

In some embodiments, when the fourth signal corresponds to multiple A-IoT devices sharing the available time unit group, the fourth signal is sent in a third time unit. The third time unit includes the last one or more time units in the available time unit group; and/or, the third time unit includes one or more time units after the available time unit group. Here, the third time unit is not used for signal transmission by the A-IoT devices.

In the embodiments of the present application, when the fourth signal corresponds to multiple A-IoT devices sharing the available time unit group, the second device may perform feedback of signal reception through one or more time units, not used for signal transmission, at the end of the available time unit group, or perform feedback of signal reception through one or more time units after the available time unit group. This, on the one hand, avoids the feedback information from interfering with the signal transmission behavior of the A-IoT devices, and on the other hand, ensures that the feedback information contained in the fourth signal can cover the information transmission situation of the multiple A-IoT devices.

In some embodiments, when the fourth signal corresponds to an A-IoT device sending the signal in the first time unit, the time domain position of the fourth signal is associated with a time domain position of the first signal, and/or the time domain position of the fourth signal is associated with a time domain position of the second signal.

In the embodiments of the present application, when the fourth signal corresponds to the A-IoT device sending the signal in the first time unit, the time domain position of the fourth signal can be determined by the time domain position of the first signal and/or the time domain position of the second signal, thereby ensuring that the A-IoT device can clearly know the time at which the second device feeds back the signal transmission situation, and ensuring the accuracy of feedback information reception.

In some embodiments, when the time domain position of the fourth signal is associated with the time domain position of the first signal, the fourth signal is sent in a fourth time unit, the fourth time unit being associated with the first time unit. Here, the fourth time unit is not used for signal transmission by the A-IoT device.

In the embodiments of the present application, when the time domain position of the fourth signal is associated with the time domain position of the first signal, the time unit where the fourth signal is located can be determined based on the first time unit, for example, the time unit where the fourth signal is located and the first time unit can be separated by a specified duration or a specified number of time units/available time units, thereby ensuring that the A-IoT device can clearly know the time at which the second device feeds back the signal transmission situation, and ensuring the accuracy of feedback information reception.

In some embodiments, when the fourth signal corresponds to the A-IoT device that sends the signal in the first time unit, the fourth signal is sends in a fifth time unit. The fifth time unit includes one or more time units in a second time window.

In the embodiments of the present application, when the fourth signal corresponds to the A-IoT device sends the signal in the first time unit, the system may specifically configure a time window for the second device to send feedback information to the first device.

In some embodiments, when the available time unit group includes the multiple available time units in the first time window, the first time window and the second time window satisfy one or more of the following relationships:
the first time window is overlapped with the second time window;
the first time window is partially overlapped with the second time window;
the first time window and the second time window are time division multiplexed;
the first time window is associated with multiple second time windows; or
multiple first time windows are associated with one second time window.

In the embodiments of the present application, the first time windows used for sending of signal to the second device by the A-IoT devices and the second time window used for feeding back the signal reception situation to the A-IoT device by the second device may be overlapped, partially overlapped, time-division multiplexed, in one-to-many association, or in many-to-one association, and the relationship between the first time windows and the second time windows can be flexibly configured to ensure the flexibility in signal transmission and feedback.

In some embodiments, when the available time unit group includes the multiple available time units in the first time window, the available time units in the first time window and the available time units in the second time window satisfy the following relationship:
a single available time unit in the first time window is associated with a single available time unit in the second time window; or
a single available time unit in the first time window is associated with multiple available time units in the second time window; or
multiple available time units in the first time window are associated with a single available time unit in the second time window.

In the embodiments of the present application, when the available time unit group includes the multiple available time units in the first time window, the available time units in the first time window and the available time units in the second time window may have one-to-one, one-to-many, or many-to-one association, thereby ensuring the flexibility of the relationship between the available time units in the first time window and the available time units in the second time window.

In some embodiments, the fourth signal is further used to indicate one or more of the following: an A-IoT device group for sending of signal in a next available time unit group; an A-IoT device for sending of signal in a next available time unit group; or an A-IoT device that does not perform sending of signal in a next available time unit group.

In the embodiments of the present application, the fourth signal may also be used to schedule A-IoT devices that send signals in the next available time unit group, thereby ensuring the flexibility of scheduling the A-IoT devices sending signals, while saving signaling resources.

In some embodiments, when the available time unit group includes the multiple available time units in the first time window, all of the time units in the first time window are available time units; or part of the time units in the first time window are available time units.

In the embodiments of the present application, each time unit in the available time unit group may be all available time units (i.e., time units used for the A-IoT devices to send signals); or among the time units in the available time unit group, part of the time units are available time units, and the remaining part of the time units may be unavailable time units. Optionally, the unavailable time units may be time units not used for the A-IoT devices to send signals.

In some embodiments, all time units in the second time window are available time units; or part of time units in the second time window are available time units.

In the embodiments of the present application, each of time units in the second time window may all be available time units (i.e., time units used for the second device to provide feedback to the first device); or part of the time units in the second time window may be available time units, and the remaining part of the time units may be unavailable time units. Optionally, the unavailable time units may be time units not used for the second device to provide feedback to the first device.

In a possible application scenario, the solution in the above embodiments of the present application may be used for signal transmission of a specific service (e.g., DO-DTT service) between an A-IoT device and a network device/relay device.

For the DO-DTT service, the network device needs to communicate with a large number of Ambient IoT devices, or the network device may communicate with a large number of Ambient IoT devices via one or more intermediate nodes (i.e., the relay devices described above). In this case, a more efficient approach is to trigger multiple Ambient IoT devices simultaneously for communication.

The network device/intermediate node may control the communciation of all Ambient IoT devices within its coverage via broadcast/groupcast/multicas manner.

If all Ambient IoT device communicate on the same time-frequency resource, the network device/intermediate node often cannot perform correct decoding of the signals sent by these Ambient IoT devices successfully. One reasonable solution is to communicate in TDM and/or FDM manner. However, due to the huge number of Ambient IoT devices, it is impossible to allocate time-frequency domain resources one by one. Moreover, if these Ambient IoT devices do not communicate with the network device/intermediate node, the network device has no way to perform dynamic resource allocation.

The above problems can be solved by the solution in the above embodiments of the present application. Hereinafter, two examples will be described.

### First embodiment

Taking the DO-DTT service as an example, through the solution in the above embodiments of the present application, an A-IoT device may send DO-DTT data within a DO-DTT service communication window based on that window. Multiple A-IoT devices (within the coverage range of a network device/intermediate node) communicate within the same DO-DTT service communication window (i.e., the first time window described above), and send a first signal to the network device/intermediate node.

The relationship between the first signal and the service communication window may include:
the first signal may be communicated in one or more time units among the time units ranging from the first available time unit to the last available time unit within the service communication window;
the starting time unit for the first signal is determined based on the start point and/or end point of the service communication window.

The time unit(s) used for the first signal may be determined in at least one of the following manners:
predefined by a protocol;
configured by a network device and/or an intermediate node: dynamically configured, or semi-static configured, etc.;
determined based on ID of the network device, and/or ID of the intermediate node, and/or ID of the A-IoTs: ID pair (for the number of all available time units) modulo, etc.; or
randomly selected over the first available time unit and the last available time unit within the service communication window: for example, each A-IoT may have a timer. When it needs to perform sending of the first signal, the initial value of the timer is randomized. When the timer counts down to zero, the sending of the first signal is performed.

Different A-IoT devices may perform sending of the first signal in different time units or in the same time unit.

The structure of the first signal may contain at least one of the following parts:
synchronization part: it may be in the form of a payload or a sequence, and its function is to assist the receiving side in synchronizing the reception of the first signal sent by the A-IoT devices;
A-IoT terminal ID: it may be a complete ID, a partial ID, or other content that serves to identify the A-IoT device;
control signaling: it is used to indicate relevant configuration for sending second information by A-IoT device, and/or it is used to negotiate relevant configuration for reception of feedback information;
data part: it is data for transmission to the network device and/or intermediate node.

Code-division sending of the first signal: When different A-IoT terminals communicate within one DO-DTT service communication window, they may communicate in the same time unit. In order to enable the receiving side to distinguish between different A-IoT devices, the A-IoT may perform sending in code division manner.

Optionally, when performing sending of the first signal, a spreading manner may be adopted. The selection of a spreading sequence is based on the A-IoT ID or configured by the network device/intermediate node.

The first signal may be sent in a modulation manner such as OOK/PSK/FSK.

A spreading sequence may be superimposed on each symbol.

Or, a spreading sequence obtained by performing spreading on each bit is modulated and then sent.

Through code division, the receiving side may distinguish and correctly solve the signals sent by different A-IoT devices on the same time-frequency resource.

The number of times the first signal is sent in the service communication window: it may be sent only once, or may be sent multiple times repeatedly.

### Determination of DO-DTT service communication window:

Length of the DO-DTT service window: it may be predefined by a protocol; or configured (dynamically or semi-statically configured) by a network device/an intermediate node.

Start and/or end point of the DO-DTT service window: it may be determined based on a time interval from the second signal, and a time domain position of the second signal.

The time interval may be protocol predefined or network device configured (dynamically configured, semi-statically configured).

DO-DTT service communication window: it may be determined based on a start point or an end point of the window in combination with the length of the window; or determined based on the start and end points of the window.

Windows for different A-IoT: they may be the same window; or different windows may be determined.

### Second signal:

It may be used to schedule/trigger/control an A-IoT device to perform DO-DTT service, and may be used to determine the DO-DTT service communication window.

Alternatively, another signal may be used to schedule/trigger/control the A-IoT device to perform DO-DTT service. The second signal is used only as an anchor signal for determining the DO-DTT service communication window.

The second signal may be sent periodically, or sent on-demand.

### Synchronization of A-IoT device with network device/intermediate node:

The synchronization may be performed based on the second signal.

The synchronization may be based on other signals.

### The number of DO-DTT service communication windows triggered by the second signal:

The second signal may trigger only one DO-DTT service communication window. After the end of the window, the second signal needs to be resent for triggering. That is, each second signal is associated with one DO-DTT service communication window.

After the second signal triggers one DO-DTT service communication window, communication of all A-IoT devices may be completed or may not be completed. In the latter case, it is necessary to send the second signal again to trigger a new DO-DTT service communication window.

Optionally, in DO-DTT service communication windows triggered by two adjacent second signals, A-IoT devices that perform communication are the same.

Optionally, in DO-DTT service communication windows triggered by two adjacent second signals, A-IoT devices that perform communication are completely different. For example, two A-IoT devices in different groups are triggered.

Optionally, in DO-DTT service communication windows triggered by two adjacent second signals, A-IoT devices that perform communication are partially the same. For example, the second trigger targets A-IoT devices that fails to communicate successfully in the first time.

The second signal may trigger N DO-DTT service communication windows. After the end of the N windows, the second signal needs to be resent for triggering. That is, each second signal is associated with N DO-DTT service communication windows.

N DO-DTT service communication windows may be determined in combination with the above scheme.

Among the N windows: the same A-IoT devices communicate.

Or, among the N windows: different windows correspond to different A-IoT groups.

The association of the A-IoT groups and the N windows may be pre-configured, or predefined by a protocol, or randomly selected, or determined based on ID.

Among the N windows: based on the fourth signal, the A-IoT devices communicating in different windows may be dynamically scheduled/controlled.

The second signal may trigger a periodic DO-DTT traffic communication window; and the DO-DTT process is terminated until a third signal is sent.

Through the above mechanism, different A-IoT devices may be controlled and dispersed into different time units, and the A-IoT devices adopt code division manner, which can minimize collisions among A-IoT devices as much as possible. However, collisions and conflicts will still exist.

### The following enhancement solution may be further employed:

In combination with FDM processing, FDM may be adopted by different A-IoT devices when sending the first signal.

The network device/intermediate node may use a fourth signal to send the result of processing the first signal to an A-IoT device, so that the A-IoT device can determine whether the sending of the first signal was successful.

An A-IoT device that successfully sends the first signal does not need to continue the sending of the first signal, which can effectively reduce the number of A-IoT devices sending the first signal, and reduce collisions/conflicts in the next/subsequent DO-DTT service conflict resolution window. Similarly, if an A-IoT may send the first signal multiple times in the same time window, it may stop the sending of the first signal when determining that the first signal has been correctly transmitted.

### Sending of the fourth signal:

It may be a signal for all A-IoT devices within the DO-DTT service communication window, and carries identification information of A-IoT devices that have communicated correctly. When an A-IoT device receives this signal, it may determine whether it has transmitted correctly.

Optionally, the fourth signal and the second signal have an association relationship.

Optionally, the fourth signal has an association relationship with the DO-DTT service communication window, its start point and/or its end point.

The fourth signal may be located within a service communication window, in the next time unit after the end of the window.

When located within the service communication window, it may be at the end, in which case the ending time unit cannot be used for the sending of the first signal. In particular, in this case, the DO-DTT service communication window includes two parts: a data transmission part + a Feedback part located at the end.

It may provide feedback for the reception of signal from A-IoT devices in each time unit, send indication information in an associated time unit, for indicating identification information of A-IoT devices that have communicated correctly.

The A-IoT device may monitor the fourth signal in a time unit associated with the time unit in which the first signal was sent.

The fourth signal and the first signal may have an association relationship (which may be used to determine the time domain position of a third signal).

The fourth signal and the second signal may have an association relationship.

The network device/intermediate node may use the fourth signal to send scheduling of the first signal to the A-IoT device.

For example: indicating/triggering/scheduling an A-IoT group to communicate; or a specific A-IoT device within the group to communicate; or all A-IoT devices except the certain A-IoT device to communicate.

The network device may define a DO-DTT service conflict resolution window (corresponding to the above second time window) for the sending of the fourth signal.

The fourth signal may be sent per time unit. It is sent on a time unit associated (one-to-one, one-to-many, or many-to-one) with the service communication window, and is used for indicating the sending result of the first signal on a time unit associated with the time unit in which the fourth signal is sent.

### Relationship between DO-DTT service conflict resolution window and DO-DTT service communication window:

They may overlap, be time-division multiplexed (TDM), or partially overlap. A DO-DTT service conflict resolution window may be associated with a DO-DTT service communication window, or a DO-DTT service conflict resolution window may be associated with multiple DO-DTT service communication windows.

### Continuity of time units within a time window:

They may be consecutive time units.

They may be consecutive available time units. i.e., actually non-consecutive time units. For example, a certain time unit(s) may be punched.

When the network device needs to perform asset inventory on A-IoT devices within its coverage area, it may send a second signal to trigger all of the A-IoT devices within the coverage area to send the first signal based on the DO-DTT service communication window.

Different A-IoT devices may determine, according to the second signal, service communication windows in which they can communication, and may randomly select different time units for communication. The sending of the first signal may be performed in code division multiplexing manner.

In this way, the network device may perform reception processing for A-IoT devices on different time units. On the one hand, TDM may reduce the number of A-IoT devices that the network device needs to process simultaneously. On the other hand, code-division sending processing of different A-IoT devices enables the network device to receive data from multiple A-IoT devices on the same time unit.

When the network successfully receives data from an A-IoT device on a certain time unit, it may send a fourth signal for indication to control that the A-IoT device stops sending of the first signal. The network device then triggers remaining A-IoT devices that have not yet been inventoried to continue the sending of the first signal in the next DO-DTT service communication window, and so on.

Optionally, the network device may determine, according to its own receiving capability, the number N of A-IoT devices that can be processed simultaneously on the same time-frequency resource, and group the A-IoT devices based on N, such that the number of A-IoT devices in each group is associated with N (e.g., equal to 2N, 3N). In this way, when determining the time units for sending of the first signal, selection may be made based on the group ID.

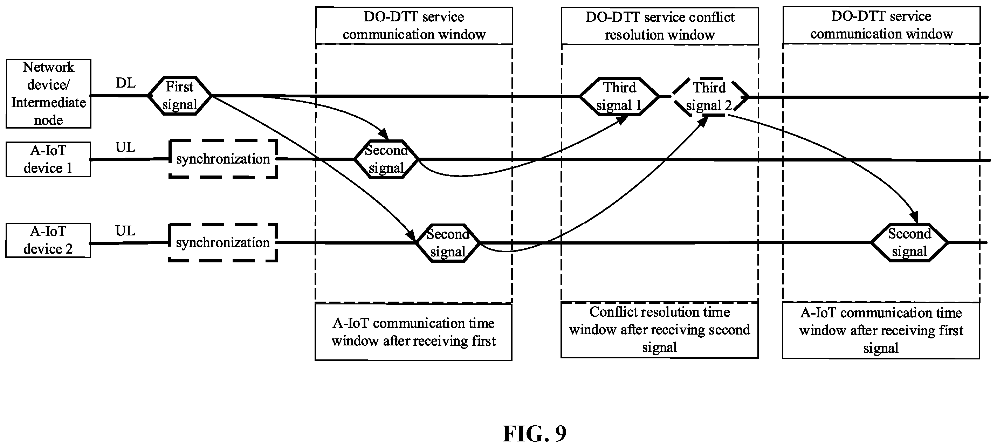

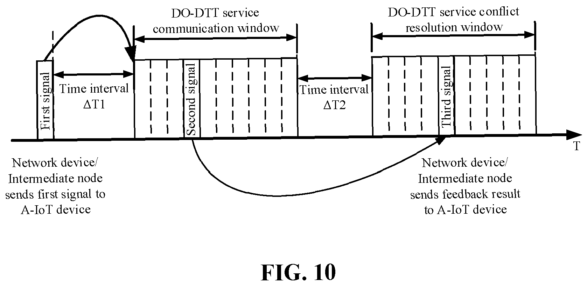

Based on the above first embodiment, please refer to FIGS. 9 and 10, which show schematic diagrams of two types of DO-DTT service-based communication windows according to embodiments of the present application.

As illustrated in FIG. 9, a network device/an intermediate node sends a second signal, A-IoT device 1 and A-IoT device 2 are synchronized with the network device/intermediate node via the second signal, and the A-IoT device 1 and the A-IoT device 2 respectively send the first signal on different available time units within a first DO-DTT service communication window, and the network device/intermediate node feeds back the feedback results for (i.e., fourth signal 1 and fourth signal 2) of the first signal sent by the A-IoT device 1 and the A-IoT device 2 respectively within a DO-DTT service conflict resolution window. The fourth signal 1 indicates that the first signal sent by the A-IoT device 1 is successfully received, and the fourth signal 2 indicates that the first signal sent by the A-IoT device 2 is successfully received. Then, the A-IoT device 2 sends the first signal again on an available time unit within the next DO-DTT service communication window.

As illustrated in FIG. 10, a network device/ an intermediate node sends a second signal, and the second signal is separated by a certain time interval ΔT1 from a corresponding DO-DTT service communication window, which contains multiple available time units, and the A-IoT device sends the first signal on one of the available time units. Correspondingly, the network device/intermediate node sends a fourth signal on a time unit associated with the available time unit in which the first signal is located within a subsequent DO-DTT service conflict resolution window, and the fourth signal is used to carry a feedback result of the reception situation of the first signal. The DO-DTT service communication window and the DO-DTT service conflict resolution window are separated by a certain time interval ΔT2.

### Second embodiment

On the basis of the first embodiment, in another possible implementation, a time window may not be explicitly defined. Instead, an available time unit group corresponding to the above first time window/a available time unit group corresponding to the above second time window may be determined by defining/configuring the following information:
1) first time unit in which sending of the first signal may be performed: the earliest time unit. In this case, an available time unit group for sending of the first signal may be determined by definition of a time interval;
2) last time unit in which sending of the second signal may be performed: the latest time unit. In this case, the available time unit group for sending of the first signal may be determined by definition of a time interval;
3) defining one or more set of available time unit groups;
4) defining an available time unit group for sending of the fourth signal according to the scheme in 1) -3) above;
   where the configuration/definition of the available time unit group may be at least one of: predefined by a protocol, semi-statically configured by the network device/ intermediate node, or dynamically configured by the network device/intermediate node.
5) the available time unit group described above may be configured through the second signal.

In the above first and second embodiments, frequency domain resources for different first and fourth signals may be the same, or may be different (for example, located in different bands).

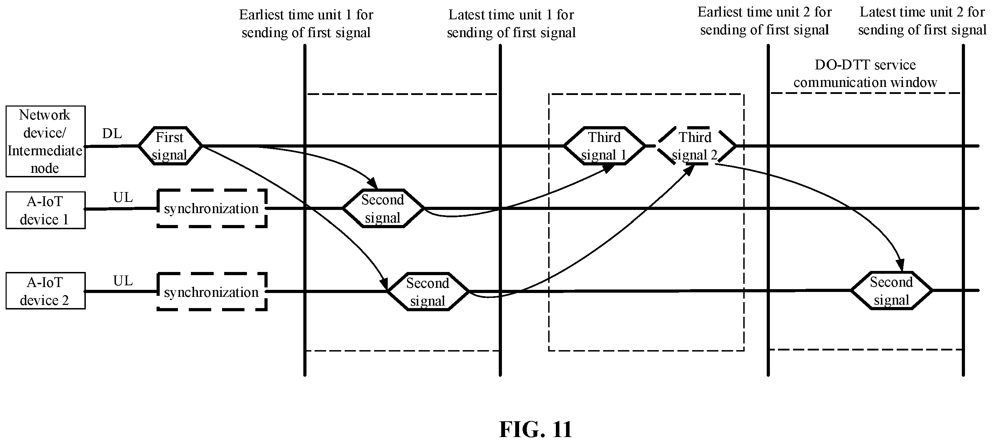

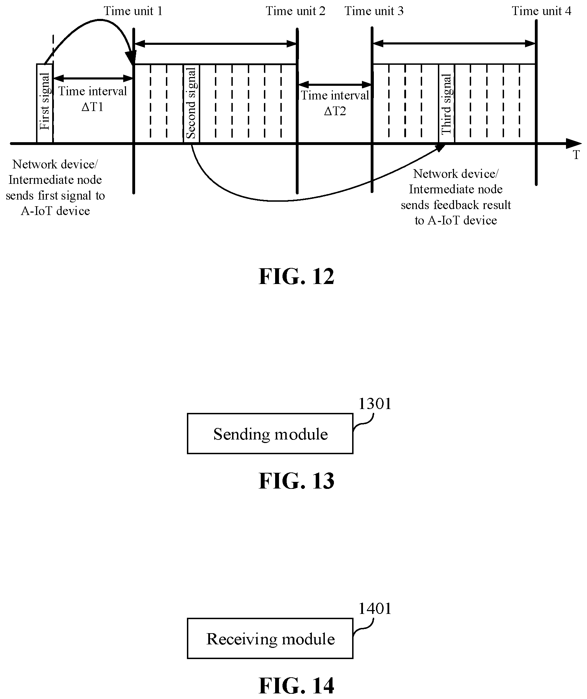

Based on the above second embodiment, please refer to FIGS. 11 and 12, which show schematic diagrams of two types of DO-DTT service-based communication windows according to the embodiments of the present application.

As illustrated in FIG. 11, the network device/intermediate node sends a second signal. A-IoT device 1 and A-IoT device 2 synchronize with the network device/intermediate node via the second signal. Furthermore, A-IoT device 1 and A-IoT device 2 respectively send the first signal on an available time unit between a pair of available time units (the first and last available time units) used for signal transmission. The network device/intermediate node respectively feeds back the reception results of the first signals sent by the A-IoT device 1 and the A-IoT device 2 (i.e., fourth signal 1 and fourth signal 2) on an available time unit between the first and last available time units used for feedback. Here, the fourth signal 1 indicates successful reception of the first signal sent by the A-IoT device 1, and fourth signal 2 indicates successful reception of the first signal sent by the A-IoT device 2. Then, the A-IoT device 2 sends the first signal again on an available time unit between the next pair of available time units.

As illustrated in FIG. 12, the network device/intermediate node sends a second signal, and the second signal is separated by a certain time interval ΔT1 from the first available time unit in a pair of available time units (the first and last available time units, i.e., time unit 1 and time unit 2). The A-IoT device sends the first signal on one available time unit between the pair of available time units, and correspondingly, the network device/intermediate node sends a fourth signal on one time unit, associated with the available time unit in which the first signal is located, in another subsequent pair of available time units (the first and the last available time units, i.e., time unit 3 and time unit 4). The fourth signal is used for carrying a feedback result on the reception situation of the first signal. Herein, the two pairs of available time units are separated by a certain time interval ΔT2.

The solution in the above embodiments of the present application proposes a collision resolution method for Ambient IoT communication. When a network device triggers performing DO-DTT service by an A-IoT device, a DO-DTT service communication window may be triggered, and all A-IoT devices or a certain A-IoT group adopts a TDM + CDM scheme for transmission within that window. This, on the one hand, enables that the number of A-IoT processed simultaneously by the network device is reduced, and on the other hand, enables that the sending signals by different A-IoT devices on the same time domain resource can be correctly received by the network device. In addition, in combination with the reception result of the A-IoT signals by the network device, a feedback signal can be sent to adjust the A-IoT devices that will communicate in the next DO-DTT service communication window, thereby enabling efficient communication and reducing collisions and conflicts in DO-DTT services.

FIG. 13 illustrates a block diagram of a wireless communication apparatus provided by an embodiment of the present application. The wireless communication apparatus has functions performed by the first device in the method of any one of FIGS. 6 to 8 described above. As illustrated in FIG. 13, the apparatus includes a sending module 1301.

The sending module 1301 is configured to send a first signal in a first time unit, where the first time unit is one or more time units in an available time unit group.

Herein, the first device is an Ambient Internet of Things (A-IoT) device, the available time unit group includes multiple available time units, and the available time unit group is shared by multiple A-IoT devices.

In some embodiments, the available time unit group includes multiple available time units in a first time window; or
the available time unit group is determined by a time domain position of a first available time unit in the available time unit group and a time interval between the first available time unit and a last available time unit in the available time unit group; or
the available time unit group is determined by a time domain position of a last available time unit in the available time unit group and a time interval between the first available time unit and the last available time unit in the available time unit group.

In some embodiments, the first available time unit is determined from the available time unit group based on one or more of following manners:
predefined by a protocol, dynamically configured by a second device, semi-statically configured by the second device, determined based on identification information of the second device, determined based on identification information of the first device, or randomly determined.

In some embodiments, the first signal includes one or more of the following:
information for synchronization, identification information of the first device, control signaling, or service data.

In some embodiments, the sending module is configured to send the first signal in the first time unit through a code division multiplexing manner and/or a frequency division multiplexing manner.

In some embodiments, the sending module is configured to send the first signal in the first time unit through a spreading manner.

In some embodiments, a spreading sequence corresponding to the spreading manner is determined by one or more of:
determined based on identification information of the first device, or configured by a second device.

In some embodiments, the spreading manner includes:
superimposing a spreading sequence on each of Orthogonal Frequency Division Multiplexing (OFDM) symbols corresponding to the first signal; or
modulating a spreading sequence obtained by performing spreading on each of bits corresponding to the first signal.

In some embodiments, the first signal is sent once within the available time unit group, or the first signal is sent multiple times repeatedly within the available time unit group.

In some embodiments, when the available time unit group includes the multiple available time units within the first time window, a length of the first time window is determined by one or more of following manners:
predefined by a protocol, dynamically configured by a second device, or semi-statically configured by the second device.

In some embodiments, when the available time unit group includes the multiple available time units in the first time window,
a start time point and/or an end time point of the first time window is associated with a time domain position of a second signal and a first time interval, the first time interval being a time interval between the start time point and/or the end time point of the first time window and the time domain position of the second signal.

In some embodiments, the first time interval is determined through one or more of following manners: predefined by a protocol, dynamically configured by a second device, or semi-statically configured by the second device.

In some embodiments, when the available time unit group includes the multiple available time units within the first time window, the first time window is determined based on one or more of the following information:
a start time point of the first time window and a length of the first time window;
an end time point of the first time window and a length of the first time window; or
a start time point of the first time window and an end time point of the first time window.

In some embodiments, the second signal is used for scheduling/triggering/controlling an A-IoT device to perform data transmission service; and/or
the second signal is used for synchronizing the first device with the second device.

In some embodiments, the second signal is a periodically transmitted signal, or the second signal is a signal transmitted on demand.

In some embodiments, the second signal is used to indicate a single first time window; or
the second signal is used to indicate multiple first time windows; or
the second signal is used to indicate the first time window that occurs periodically.

In some embodiments, when the second signal is used to indicate the single first time window,
A-IoT devices corresponding to first time windows indicated by two adjacent second signals are the same; or
A-IoT devices corresponding to first time windows indicated by two adjacent second signals are different; or
A-IoT devices corresponding to first time windows indicated by two adjacent second signals are partially the same.

In some embodiments, when the second signal is used to indicate the multiple the first time windows, or the second signal is used to indicate the first time window that occurs periodically,
A-IoT devices corresponding to different first time windows indicated by the second signal are the same; or
different first time windows indicated by the second signal correspond to different A-IoT device groups.

In some embodiments, when different first time windows indicated by the second signal correspond to different A-IoT device groups, an association relationship between the first time windows and the A-IoT device groups is determined by one or more of the following manners:
predefined by a protocol, dynamically configured by a second device, semi-statically configured by the second device, randomly determined, or determined based on identification information of the A-IoT device groups.

In some embodiments, when the second signal is used to indicate the first time window that occurs periodically, the first time window that occurs periodically is triggered to terminate by a third signal.

In some implementations, the apparatus further includes a receiving module.

The receiving module is configured to receive a fourth signal sent by a second device, where the fourth signal is used to indicate whether the second device has successfully received the first signal.

In some embodiments, the sending module is further configured to send the first signal in a second time unit when the fourth signal indicates that the second device has not successfully received the first signal. The second time unit includes one or more time units in a next available time unit group.

In some embodiments, the fourth signal corresponds to the multiple A-IoT devices sharing the available time unit group; or
the fourth signal corresponds to an A-IoT device that sends a signal in the first time unit.

In some embodiments, when the fourth signal corresponds to the multiple A-IoT devices sharing the available time unit group, a time domain position of the fourth signal is associated with a time domain position of the second signal.

In some embodiments, when the fourth signal corresponds to the multiple A-IoT devices sharing the available time unit group, the fourth signal is associated with the available time unit group.

In some embodiments, when the fourth signal corresponds to the multiple A-IoT devices sharing the available time unit group, the fourth signal is associated with a time domain position of a first available time unit in the available time unit group and/or a time domain position of a last available time unit in the available time unit group.

In some embodiments, when the fourth signal corresponds to the multiple A-IoT devices sharing the available time unit group, the fourth signal is sent in a third time unit.

The third time unit includes last one or more time units in the available time unit group; and/or, the third time unit includes one or more time units after the available time unit group.

The third time unit is not used for signal transmission by the A-IoT device.

In some embodiments, when the fourth signal corresponds to an A-IoT device that sends the signal in the first time unit, the time domain position of the fourth signal is associated with the time domain position of the first signal, and/or the time domain position of the fourth signal is associated with the time domain position of the second signal.

In some embodiments, when the time domain position of the fourth signal is associated with the time domain position of the first signal, the fourth signal is sent in a fourth time unit, the fourth time unit being associated with the first time unit. Here, the fourth time unit is not used for sending of signal by the A-IoT device.

In some embodiments, when the fourth signal corresponds to the A-IoT device that sends the signal in the first time unit, the fourth signal is sent in a fifth time unit. The fifth time unit includes one or more time units in a second time window.

In some embodiments, when the available time unit group includes the multiple available time units in the first time window, the first time window and the second time window satisfy one or more of the following relationships:
the first time window is overlapped with the second time window;
the first time window is partially overlapped with the second time window;
the first time window and the second time window are time division multiplexed;
one first time window is associated with multiple the second time windows;
multiple first time windows are associated with one second time windows.

In some embodiments, when the available time unit group includes the multiple available time units in the first time window, the available time units in the first time window and the available time units in the second time window satisfy the following relationship:
a single available time unit in the first time window is associated with a single available time unit in the second time window; or
a single available time unit in the first time window is associated with multiple available time units in the second time window; or
multiple available time units in the first time window are associated with a single available time unit in the second time window.

In some embodiments, the fourth signal is further used to indicate one or more of the following:
an A-IoT device group for sending of signal in a next available time unit group;
an A-IoT device for sending of signal in a next available time unit group;
an A-IoT device that does not perform sending of signal in a next available time unit group.

In some embodiments, when the available time unit group includes the multiple available time units in the first time window,
all time units in the first time window are available time units; or
part of time units in the first time window are available time units.

In some embodiments, all time units in the second time window are available time units; or
part of time units in the second time window are available time units.

FIG. 14 illustrates a block diagram of a wireless communication apparatus provided by an embodiment of the present application. The wireless communication apparatus has functions performed by the second device in the method of any one of FIGS. 6 to 8 described above. As illustrated in FIG. 14, the apparatus includes a receiving module 1401.

The receiving module 1401 is configured to receive a first signal that is sent by a first device in a first time unit, where the first time unit is one or more time units in an available time unit group.

Herein, the first device is an A-IoT device, the available time unit group includes a plurality of available time units, and the available time unit group is shared by multiple A-IoT devices.

In some embodiments, the available time unit group includes multiple available time units in a first time window; or
the available time unit group is determined by a time domain position of a first available time unit in the available time unit group and a time interval between the first available time unit and a last available time unit in the available time unit group; or
the available time unit group is determined by a time domain position of a last available time unit in the available time unit group and a time interval between the first available time unit and the last available time unit in the available time unit group.

In some embodiments, the first time unit is determined from the available time unit group by one or more of following manners: predefined by a protocol, dynamically configured by a second device, semi-statically configured by the second device, determined based on identification information of the second device, determined based on identification information of the first device, or randomly determined.

In some embodiments, the first signal includes one or more of the following: information for synchronization, identification information of the first device, control signaling, or service data.

In some embodiments, the receiving module is configured to receive the first signal that is sent by the first device in the first time unit through a code division multiplexing manner and/or a frequency division multiplexing manner.

In some embodiments, the receiving module is configured to receive the first signal that is sent by the first device in the first time unit through a spreading manner.

In some embodiments, a spreading sequence corresponding to the spreading manner is determined by one or more of following manners:
determined based on identification information of the first device, or configured by a second device.

In some embodiments, the spreading manner includes:
superimposing a spreading sequence on each of Orthogonal Frequency Division Multiplexing (OFDM) symbols corresponding to the first signal; or
modulating a spreading sequence obtained by performing spreading on each of bits corresponding to the first signal.

In some embodiments, the first signal is sent once within the available time unit group, or the first signal is sent multiple times repeatedly within the available time unit group.

In some embodiments, when the available time unit group includes the multiple available time units within the first time window, a length of the first time window is determined by one or more of the following manners:
predefined by a protocol, dynamically configured by a second device, or semi-statically configured by the second device.

In some embodiments, when the available time unit group includes the multiple available time units in the first time window,
a start time point and/or an end time point of the first time window is associated with a time domain position of a second signal and a first time interval, the first time interval being a time interval between the start time point and/or the end time point of the first time window and the time domain position of the second signal.

In some embodiments, the first time interval is determined based on one or more of following manners:
predefined by a protocol, dynamically configured by a second device, or semi-statically configured by the second device.

In some embodiments, when the available time unit group includes the multiple available time units within the first time window, the first time window is determined by one or more of the following information:
a start time point of the first time window and a length of the first time window;
an end time point of the first time window and a length of the first time window; or
a start time point of the first time window and an end time point of the first time window.

In some embodiments, the second signal is used for scheduling/triggering/controlling an A-IoT device to perform data transmission service; and/or
the second signal is used for synchronizing the first device with the second device.

In some embodiments, the second signal is a signal sent periodically, or the second signal is a signal sent on demand.

In some embodiments, the second signal is used to indicate a single first time window; or
the second signal to indicate multiple first time windows; or
the second signal is used to indicate the first time window that occurs periodically.

In some embodiments, when the second signal is used to indicate the single first time window,
A-IoT devices corresponding to first time windows indicated by two adjacent second signals are the same; or
A-IoT devices corresponding to first time windows indicated by two adjacent second signals are different; or
A-IoT devices corresponding to first time windows indicated by two adjacent second signals are partially the same.

In some embodiments, when the second signal is used to indicate the multiple the first time windows, or the second signal is used to indicate the first time window that occurs periodically,
A-IoT devices corresponding to different first time windows indicated by the second signal are the same; or
different first time windows indicated by the second signal correspond to different A-IoT device groups.

In some embodiments, when different first time windows indicated by the second signal correspond to different A-IoT device groups, an association relationship between the first time windows and the A-IoT device groups is determined by one or more of the following manners:
predefined by a protocol, dynamically configured by a second device, semi-statically configured by the second device, randomly determined, or determined based on identification information of the A-IoT device groups.

In some embodiments, when the second signal is used to indicate the first time window that occurs periodically, the first time window that occurs periodically is triggered to terminate by a third signal.

In some embodiments, the apparatus further includes a sending module, configured to send a fourth signal to a first device, the fourth signal being used for indicating whether the second device has successfully received the first signal.

In some embodiments, the receiving module is further configured to receive the first signal that is sent by the first device in a second time unit, when the fourth signal indicates that the second device has not successfully received the first signal. The second time unit inlcudes one or more time units in a next available time unit group.

In some embodiments, the fourth signal corresponds to the multiple A-IoT devices sharing the available time unit group; or
the fourth signal corresponds to an A-IoT device that sends a signal in the first time unit.

In some embodiments, when the fourth signal corresponds to the multiple A-IoT devices sharing the available time unit group, a time domain position of the fourth signal is associated with a time domain position of the second signal.

In some embodiments, when the fourth signal corresponds to the multiple A-IoT devices sharing the available time unit group, the fourth signal is associated with the available time unit group.

In some embodiments, when the fourth signal corresponds to the multiple A-IoT devices sharing the available time unit group, the fourth signal is associated with a time domain position of a first available time unit in the available time unit group and/or a time domain position of a last available time unit in the available time unit group.

In some embodiments, when the fourth signal corresponds to the multiple A-IoT devices sharing the available time unit group, the fourth signal is sent in a third time unit.

The third time unit includes last one or more time units in the available time unit group; and/or, the third time unit includes one or more time units after the available time unit group.

The third time unit is not used for sending of signal by the A-IoT device.

In some embodiments, when the fourth signal corresponds to the A-IoT device that sends the signal in the first time unit, a time domain position of the fourth signal is associated with a time domain position of the first signal, and/or a time domain position of the fourth signal is associated with a time domain position of the second signal.

In some embodiments, when the time domain position of the fourth signal is associated with the time domain position of the first signal, the fourth signal is sent in a fourth time unit.

The fourth time unit is associated with the first time unit.

Herein, the fourth time unit is not used for sending of signal by the A-IoT device.

In some embodiments, when the fourth signal corresponds to the A-IoT device that sends the signal in the first time unit, the fourth signal is sent in a fifth time unit.

The fifth time unit is one or more time units in a second time window.

In some embodiments, when the available time unit group includes the multiple available time units in the first time window, the first time window and the second time window satisfy one or more of the following relationships:
the first time window is overlapped with the second time window;
the first time window is partially overlapped with the second time window;
the first time window and the second time window are time division multiplexed;
one first time window is associated with multiple the second time windows;
multiple first time windows are associated with one second time windows.

In some embodiments, when the available time unit group includes the multiple available time units in the first time window, the available time units in the first time window and the available time units in the second time window satisfy the following relationship:
a single available time unit in the first time window is associated with a single available time unit in the second time window; or
a single available time unit in the first time window is associated with multiple available time units in the second time window; or
multiple available time units in the first time window are associated with a single available time unit in the second time window.

In some embodiments, the fourth signal is further used to indicate one or more of the following:
an A-IoT device group for sending of signal in a next available time unit group;
an A-IoT device for sending of signal in a next available time unit group;
an A-IoT device that does not perform sending of signal in a next available time unit group.

In some embodiments, when the available time unit group includes the multiple available time units in the first time window,
all time units in the first time window are available time units; or
part of time units in the first time window are available time units.

In some embodiments, all time units in the second time window are available time units; or
part of time units in the second time window are available time units.

It should be noted that the apparatuses provided in the above embodiments, when realizing their functions, are described merely by way of example through the division of the aforementioned functional modules. In practical applications, the above functions may be allocated to and completed by different functional modules as needed. That is, the internal structure of the device may be divided into different functional modules to accomplish all or part of the functions described above.

With regard to the apparatuses in the above embodiments, the specific implementations in which various modules perform operations have been described in detail in the embodiments related to the methods, and will not be elaborated in detail here.

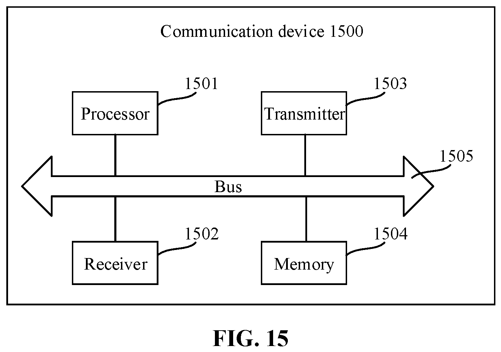

FIG. 15 is a block diagram of a communication device 1500 provided by an embodiment of the present application. The communication device 1500 may include a processor 1501, a receiver 1502, a transmitter 1503, a memory 1504, and a bus 1505.

The processor 1501 includes one or more processing cores, and the processor 1501 runs software programs and modules to perform various functional applications and information processing.

The receiver 1502 and the transmitter 1503 may be implemented as a communication component, which may be a communication chip. The communication chip may also be referred to as a transceiver. The memory 1504 is connected to the processor 1501 via the bus 1505. The memory 1504 may be configured to store a computer program, and the processor 1501 is configured to execute the computer program to implement various operations in the method embodiments described above.

Further, the memory 1504 may be implemented by any type of volatile or non-volatile storage device, including, but not limited to, a magnetic or optical disk, an electrically erasable programmable read-only memory, an erasable programmable read-only memory, a static ready-to-access memory, a read-only memory, a magnetic memory, a flash memory, a programmable read-only memory, or a combination thereof.

In an exemplary solution, when the communication device 1500 is implemented as the network device/relay device described above, the receiver 1502 and the processor 1501 execute the computer program to cause the communication device to implement various operations performed by the second device in the method illustrated in FIGS. 6 to 8.

In an exemplary solution, when the communication device 1500 is implemented as the ambient IoT device described above, the transmitter 1503 execute the computer program to cause the communication device to implement various operations performed by the first device in the method illustrated in FIGS. 6 to 8.

The embodiments of the present application further provide a computer-readable storage medium, having stored therein a computer program, which is loaded and executed by a processor to implement all or part of operations performed by the first device or the second device in the methods illustrated in FIGS. 6 to 8.

The present application further provides a chip, which runs in a communication device, such that the communication device performs all or part of operations performed by the first device or the second device in the methods illustrated in FIGS. 6 to 8.

The present application also provides a computer program product, the computer program product or computer program including computer instructions stored in a computer readable storage medium. A processor of a communication device reads the computer instructions from the computer-readable storage medium, such that the communication device performs all or part of operations performed by the first device or the second device in the methods illustrated in FIGS. 6 to 8.

The present application further provides a computer program, which is executed by a communication device to implement all or part of operations performed by the first device or the second device in the methods illustrated in FIGS. 6 to 8..

Those skilled in the art should recognize that in one or more of the examples described above, the functions described in the embodiments of the present application may be implemented in hardware, software, firmware, or any combination thereof. When implemented in software, these functions may be stored in a computer readable medium or transmitted as one or more instructions or codes on a computer readable medium. The computer-readable medium includes a computer storage medium and communication medium, where the communication medium includes any medium that facilitates transfer of a computer program from one place to another. The storage medium may be any available medium accessible by a general-purpose or special-purpose computer.

The foregoing are merely preferable embodiments of the present application and are not intended to limit the present application. All modifications, replacements and improvements made within the spirit and principles of the disclosure shall fall within the scope of protection of the disclosure.

## Claims

1. A method of wireless communication, performed by a first device, the method comprising:
sending a first signal in a first time unit, the first time unit being one or more time units in an available time unit group,
wherein the first device is an Ambient Internet of Things (A-IoT) device, the available time unit group comprises a plurality of available time units, and the available time unit group is shared by a plurality of A-IoT devices.

2. The method of claim 1, wherein
the available time unit group comprises the plurality of available time units within a first time window; or
the available time unit group is determined by a time domain position of a first available time unit in the available time unit group and a time interval between the first available time unit and a last available time unit in the available time unit group; or
the available time unit group is determined by a time domain position of a last available time unit in the available time unit group and a time interval between the first available time unit and the last available time unit in the available time unit group.

3. The method of claim 1 or 2, wherein the first available time unit is determined from the available time unit group based on one or more of following manners:
predefined by a protocol, dynamically configured by a second device, semi-statically configured by the second device, determined based on identification information of the second device, determined based on identification information of the first device, or randomly determined.

4. The method of any one of claims 1 to 3, wherein the first signal comprises one or more of the following:
information for synchronization, identification information of the first device, control signaling, or service data.

5. The method of any one of claims 1 to 4, wherein sending the first signal in the first time unit comprises:
sending the first signal in the first time unit through a code division multiplexing manner and/or a frequency division multiplexing manner.

6. The method of any one of claims 1 to 5, wherein sending the first signal in the first time unit comprises:
sending the first signal in the first time unit through a spreading manner.

7. The method of claim 6, wherein a spreading sequence corresponding to the spreading manner is determined based on one or more of following manners:
determined based on identification information of the first device, or configured by a second device.

8. The method of claim 6 or 7, wherein the spreading manner comprises:
superimposing a spreading sequence on each of Orthogonal Frequency Division Multiplexing (OFDM) symbols corresponding to the first signal; or
modulating a spreading sequence obtained by performing spreading on each of bits corresponding to the first signal.

9. The method of any one of claims 1 to 8, wherein the first signal is sent once within the available time unit group, or the first signal is sent repeatedly multiple times within the available time unit group.

10. The method of claim 2, wherein when the available time unit group comprises the plurality of available time units within the first time window, a length of the first time window is determined based on one or more of following manners:
predefined by a protocol, dynamically configured by a second device, or semi-statically configured by the second device.

11. The method of claim 2 or 10, wherein when the available time unit group comprises the plurality of available time units within the first time window,
a start time point and/or an end time point of the first time window is associated with a time domain position of a second signal and a first time interval, the first time interval being a time interval between the start time point and/or the end time point of the first time window and the time domain position of the second signal.

12. The method of claim 11, wherein the first time interval is determined based on one or more of following manners:
predefined by a protocol, dynamically configured by a second device, or semi-statically configured by the second device.

13. The method of any one of claims 2, 10 to 12, wherein when the available time unit group comprises the plurality of available time units within the first time window, the first time window is determined based on one or more of following information:
a start time point of the first time window and a length of the first time window;
an end time point of the first time window and a length of the first time window; or
a start time point of the first time window and an end time point of the first time window.

14. The method of claim 10 or 11, wherein
the second signal is used for scheduling/triggering/controlling an A-IoT device to perform data transmission service; and/or
the second signal is used for synchronizing the first device with the second device.

15. The method of claim 10, 11 or 14, wherein the second signal is sent periodically, or the second signal is sent on demand.

16. The method of claim 10, 11, 14 or 15, wherein
the second signal is used to indicate a single first time window; or
the second signal to indicate a plurality of first time windows; or
the second signal is used to indicate the first time window that occurs periodically.

17. The method of any one of claims 2 to 16, wherein when the second signal is used to indicate the single first time window,
A-IoT devices corresponding to first time windows indicated by two adjacent second signals are the same; or
A-IoT devices corresponding to first time windows indicated by two adjacent second signals are different; or
A-IoT devices corresponding to first time windows indicated by two adjacent second signals are partially the same.

18. The method of claim 16, wherein when the second signal is used to indicate the plurality of the first time windows, or the second signal is used to indicate the first time window that occurs periodically,
A-IoT devices corresponding to different first time windows indicated by the second signal are the same; or
different first time windows indicated by the second signal correspond to different A-IoT device groups.

19. The method of claim 18, wherein when different first time windows indicated by the second signal correspond to different A-IoT device groups, an association relationship between the first time windows and the A-IoT device groups is determined by one or more of following manners:
predefined by a protocol, dynamically configured by a second device, semi-statically configured by the second device, randomly determined, or determined based on identification information of the A-IoT device groups.

20. The method of claim 16, wherein when the second signal is used to indicate the first time window that occurs periodically, the periodically occurring of the first time window is triggered to be terminated by a third signal.

21. The method of any one of claims 1 to 20, further comprising:
receiving a fourth signal sent by a second device, the fourth signal being used to indicate whether the second device has successfully received the first signal.

22. The method of claim 21, further comprising:
sending the first signal in a second time unit when the fourth signal indicates that the second device has not successfully received the first signal, the second time unit being one or more time units in a next available time unit group.

23. The method of claim 21 or 22, wherein
the fourth signal corresponds to the plurality of A-IoT devices sharing the available time unit group; or
the fourth signal corresponds to an A-IoT device that sends a signal in the first time unit.

24. The method of claim 23, wherein when the fourth signal corresponds to the plurality of A-IoT devices sharing the available time unit group, a time domain position of the fourth signal is associated with a time domain position of the second signal.

25. The method of claim 23, wherein when the fourth signal corresponds to the plurality of A-IoT devices sharing the available time unit group, the fourth signal is associated with the available time unit group.

26. The method of claim 25, wherein when the fourth signal corresponds to the plurality of A-IoT devices sharing the available time unit group, the fourth signal is associated with a time domain position of a first available time unit in the available time unit group and/or a time domain position of a last available time unit in the available time unit group.

27. The method of claim 25, wherein when the fourth signal corresponds to the plurality of A-IoT devices sharing the available time unit group, the fourth signal is sent in a third time unit;
the third time unit comprising last one or more time units in the available time unit group, and/or, the third time unit comprising one or more time units after the available time unit group.
wherein the third time unit is not used for sending of signal by the A-IoT device.

28. The method of claim 23, wherein when the fourth signal corresponds to the A-IoT device that sends the signal in the first time unit, a time domain position of the fourth signal is associated with a time domain position of the first signal, and/or a time domain position of the fourth signal is associated with a time domain position of a second signal.

29. The method of claim 28, wherein when the time domain position of the fourth signal is associated with the time domain position of the first signal, the fourth signal is sent in a fourth time unit,
the fourth time unit being associated with the first time unit,
wherein the fourth time unit is not used for sending of signal by the A-IoT device.

30. The method of claim 23, wherein when the fourth signal corresponds to the A-IoT device that sends the signal in the first time unit, the fourth signal is sent in a fifth time unit,
the fifth time unit being one or more time units in a second time window.

31. The method of claim 30, wherein when the available time unit group comprises the plurality of the available time units in a first time window, the first time window and the second time window satisfy one or more of following relationships:
the first time window is overlapped with the second time window;
the first time window is partially overlapped with the second time window;
the first time window and the second time window are time division multiplexed;
one first time window is associated with a plurality of second time windows; or
a plurality of first time windows are associated with one second time windows.

32. The method of claim 30 or 31, wherein when the available time unit group comprises the plurality of the available time units in a first time window, the available time units in the first time window and the available time units in the second time window satisfy the following relationship:
a single available time unit in the first time window is associated with a single available time unit in the second time window; or
a single available time unit in the first time window is associated with a plurality of available time units in the second time window; or
a plurality of available time units in the first time window are associated with a single available time unit in the second time window.

33. The method of any one of claims 21 to 32, wherein the fourth signal is further used to indicate one or more of the following:
an A-IoT device group for sending of signal in a next available time unit group;
an A-IoT device for sending of signal in a next available time unit group; or
an A-IoT device that does not perform sending of signal in a next available time unit group.

34. The method of claim 2, wherein when the available time unit group comprises the plurality of available time units in the first time window,
all time units in the first time window are available time units; or
part of time units in the first time window are available time units.

35. The method of claim 30, wherein
all time units in the second time window are available time units; or
part of time units in the second time window are available time units.

36. A method of wireless communication, performed by a second device, the method comprising:
receiving a first signal that is sent by a first device in a first time unit, the first time unit being one or more time units in an available time unit group,
wherein the first device is an Ambient Internet of Things (A-IoT) device, the available time unit group comprises a plurality of available time units, and the available time unit group is shared by a plurality of A-IoT devices.

37. The method of claim 36, wherein
the available time unit group comprises the plurality of available time units within a first time window; or
the available time unit group is determined by a time domain position of a first available time unit in the available time unit group and a time interval between the first available time unit and a last available time unit in the available time unit group; or
the available time unit group is determined by a time domain position of a last available time unit in the available time unit group and a time interval between the first available time unit and the last available time unit in the available time unit group.

38. The method of claim 36 or 37, wherein the first available time unit is determined from the available time unit group based on one or more of following manners:
predefined by a protocol, dynamically configured by a second device, semi-statically configured by the second device, determined based on identification information of the second device, determined based on identification information of the first device, or randomly determined.

39. The method of any one of claims 36 to 38, wherein the first signal comprises one or more of the following:
information for synchronization, identification information of the first device, control signaling, or service data.

40. The method of any one of claims 36 to 39, wherein the receiving the first signal that is sent by the first device in the first time unit comprises:
receiving the first signal that is sent by the first device in the first time unit through a code division multiplexing manner and/or a frequency division multiplexing manner.

41. The method of any one of claims 36 to 40, wherein receiving the first signal that is sent by the first device in the first time unit comprises:
receiving the first signal that is sent by the first device in the first time unit through a spreading manner.

42. The method of claim 41, wherein a spreading sequence corresponding to the spreading manner is determined based on one or more of following manners:
determined based on the identification information of the first device, or configured by a second device.

43. The method of claim 41 or 42, wherein the spreading manner comprises:
superimposing a spreading sequence on each of Orthogonal Frequency Division Multiplexing (OFDM) symbols corresponding to the first signal; or
modulating a spreading sequence obtained by performing spreading on each of bits corresponding to the first signal.

44. The method of any one of claims 36 to 43, wherein the first signal is sent once within the available time unit group, or the first signal is sent repeatedly multiple times within the available time unit group.

45. The method of claim 37, wherein when the available time unit group comprises the plurality of available time units within the first time window, a length of the first time window is determined based on one or more of following manners:
predefined by a protocol, dynamically configured by a second device, or semi-statically configured by the second device.

46. The method of claim 37 or 45, wherein when the available time unit group comprises the plurality of available time units within the first time window,
a start time point and/or an end time point of the first time window is associated with a time domain position of a second signal and a first time interval, the first time interval being a time interval between the start time point and/or the end time point of the first time window and the time domain position of the second signal.

47. The method of claim 46, wherein the first time interval is determined based on one or more of following manners:
predefined by a protocol, dynamically configured by a second device, or semi-statically configured by the second device.

48. The method of any one of claims 37, 45 to 47, wherein when the available time unit group comprises the plurality of available time units within the first time window, the first time window is determined based on one or more of following information:
a start time point of the first time window and a length of the first time window;
an end time point of the first time window and a length of the first time window; or
a start time point of the first time window and an end time point of the first time window.

49. The method of claim 45 or 46, wherein
the second signal is used for scheduling/triggering/controlling an A-IoT device to perform data transmission service; and/or
the second signal is used for synchronizing the first device with the second device.

50. The method of claim 45, 46 or 49, wherein the second signal is a signal sent periodically, or the second signal is a signal sent on demand.

51. The method of claim 45, 46, 49 or 50, wherein
the second signal is used to indicate a single first time window; or
the second signal to indicate a plurality of first time windows; or
the second signal is used to indicate the first time window that occurs periodically.

52. The method of any claim 51, wherein when the second signal is used to indicate the single first time window,
A-IoT devices corresponding to first time windows indicated by two adjacent second signals are the same; or
A-IoT devices corresponding to first time windows indicated by two adjacent second signals are different; or
A-IoT devices corresponding to first time windows indicated by two adjacent second signals are partially the same.

53. The method of claim 51, wherein when the second signal is used to indicate the plurality of the first time windows, or the second signal is used to indicate the first time window that occurs periodically,
A-IoT devices corresponding to different first time windows indicated by the second signal are the same; or
different first time windows indicated by the second signal correspond to different A-IoT device groups.

54. The method of claim 53, wherein when different first time windows indicated by the second signal correspond to different A-IoT device groups, an association relationship between the first time windows and the A-IoT device groups is determined by one or more of following manners:
predefined by a protocol, dynamically configured by a second device, semi-statically configured by the second device, randomly determined, or determined based on identification information of the A-IoT device groups.

55. The method of claim 51, wherein when the second signal is used to indicate the first time window that occurs periodically, the first time window that occurs periodically is triggered to be suspended by a third signal.

56. The method of any one of claims 36 to 55, further comprising:
sending a fourth signal to a first device, the fourth signal being used to indicate whether the second device has successfully received the first signal.

57. The method of claim 56, further comprising:
receiving the first signal that is sent by the first device in a second time unit, when the fourth signal indicates that the second device has not successfully received the first signal, the second time unit being one or more time units in a next available time unit group.

58. The method of claim 56 or 57, wherein
the fourth signal corresponds to the plurality of A-IoT devices sharing the available time unit group; or
the fourth signal corresponds to an A-IoT device that sends a signal in the first time unit.

59. The method of claim 58, wherein when the fourth signal corresponds to the plurality of A-IoT devices sharing the available set of time units, a time domain position of the fourth signal is associated with a time domain position of the second signal.

60. The method of claim 58, wherein when the fourth signal corresponds to the plurality of A-IoT devices sharing the available time unit group, the fourth signal is associated with the available time unit group.

61. The method of claim 60, wherein when the fourth signal corresponds to the plurality of A-IoT devices sharing the available time unit group, the fourth signal is associated with a time domain position of a first available time unit in the available time unit group and/or a time domain position of a last available time unit in the available time unit group.

62. The method of claim 60, wherein when the fourth signal corresponds to the plurality of A-IoT devices sharing the available time unit group, the fourth signal is sent in a third time unit;
the third time unit comprising last one or more time units in the available time unit group, and/or, the third time unit comprising one or more time units after the available time unit group.
wherein the third time unit is not used for sending of signal by the A-IoT device.

63. The method of claim 58, wherein when the fourth signal corresponds to the A-IoT device that sends the signal in the first time unit, a time domain position of the fourth signal is associated with a time domain position of the first signal, and/or a time domain position of the fourth signal is associated with a time domain position of a second signal.

64. The method of claim 63, wherein when the time domain position of the fourth signal is associated with the time domain position of the first signal, the fourth signal is sent in a fourth time unit,
the fourth time unit being associated with the first time unit,
wherein the fourth time unit is not used for sending of signal by the A-IoT device.

65. The method of claim 58, wherein when the fourth signal corresponds to the A-IoT device that sends the signal in the first time unit, the fourth signal is sent in a fifth time unit,
the fifth time unit being one or more time units in a second time window.

66. The method of claim 65, wherein when the available time unit group comprises the plurality of the available time units in a first time window, the first time window and the second time window satisfy one or more of following relationships:
the first time window is overlapped with the second time window;
the first time window is partially overlapped with the second time window;
the first time window and the second time window are time division multiplexed;
one first time window is associated with a plurality of second time windows; or
a plurality of first time windows are associated with one second time windows.

67. The method of claim 65 or 66, wherein when the available time unit group comprises the plurality of the available time units in a first time window, the available time units in the first time window and the available time units in the second time window satisfy the following relationship:
a single available time unit in the first time window is associated with a single available time unit in the second time window; or
a single available time unit in the first time window is associated with a plurality of available time units in the second time window; or
a plurality of available time units in the first time window are associated with a single available time unit in the second time window.

68. The method of any one of claims 56 to 67, wherein the fourth signal is further used to indicate one or more of the following:
an A-IoT device group for sending of signal in a next available time unit group;
an A-IoT device for sending of signal in a next available time unit group; or
an A-IoT device that does not perform sending of signal in a next available time unit group.

69. The method of claim 37, wherein when the available time unit group comprises the plurality of available time units in the first time window,
all time units in the first time window are available time units; or
part of time units in the first time window are available time units.

70. The method of claim 69, wherein
all time units in the second time window are available time units; or
part of time units in the second time window are available time units.

71. An apparatus of wireless communication, comprising:
a sending module, configured to send a first signal in a first time unit, the first time unit being one or more time units in an available time unit group,
wherein the first device is an Ambient Internet of Things (A-IoT) device, the available time unit group comprises a plurality of available time units, and the available time unit group is shared by a plurality of A-IoT devices.

72. An apparatus of wireless communication, comprising:
a receiving module, configured to receive a first signal that is sent by the first device in a first time unit, the first time unit being one or more time units in an available time unit group,
wherein the first device is an Ambient Internet of Things (A-IoT) device, the available time unit group comprises a plurality of available time units, and the available time unit group is shared by a plurality of A-IoT devices.

73. A communication device, comprising a processor, a memory and a transceiver, wherein
the memory has a computer program stored therein, and the processor executes the computer program to cause the A-IoT device to implement the wireless communication method of any one of claims 1 to 70.

74. A computer readable storage medium, having stored therein a computer program, which is executed by a processor of a communication device to cause the communication device to implement the method of wireless communication of any one of claims 1 to 70.

75. A chip including a logic circuit and an application program, wherein the chip runs in a communication device to cause the communication device to perform the method of wireless communication of any one of claims 1 to 70.

76. A computer program product, comprising computer instructions stored in a computer readable storage medium, wherein a processor of a communication device reads and executes the computer instructions from the computer readable storage medium, such that the communication device performs the method of wireless communication of any one of claims 1 to 70.

77. A computer program, which is executed by a processor of a communication device to cause the communication device to implement the method of wireless communication of any one of claims 1 to 70.
